# EUROPEAN PATENT APPLICATION

(11) **EP 4 825 231 A1**
(43) Date of publication of application: **21.10.2026**
(21) Application number: 23961458.9
(22) Date of filing: 13.12.2023
(51) Int. Cl.: A24F 40/53

(54) **POWER SUPPLY UNIT FOR AEROSOL GENERATING DEVICE**

(71) Applicant: Japan Tobacco Inc., Tokyo 105-6927 (JP)
(72) Inventor: NAGAHAMA Toru, Tokyo 130-8603 (JP)
(74) Representative: Hoffmann Eitle
(86) International application number: PCT/JP2023/044703
(87) International publication number: WO 2025/126392

(57) **Abstract**

A power supply unit for an inhalation device which generates an aerosol from an aerosol source comprises: a positive terminal (90a), a negative terminal (90b) and a temperature terminal (90c), which are examples of a connecting portion, to which is connected a power source unit (111) capable of storing power and configured to be removable from the power supply unit; a remaining capacity meter IC (1162), which is an example of a memory unit, for storing information indicating a cycle count value and/or state of health of the power source unit (111) connected to said terminals; and an MCU (1161), which is an example of a control unit, for controlling operation of the power supply unit on the basis of the cycle count value and/or the state of health of the power source unit (111), by referring to the information stored in the remaining capacity meter IC (1162). When the power source unit (111) has been replaced, the MCU (1161) resets the cycle count value and/or the state of health stored by the the remaining capacity meter IC (1162) to a predetermined value.

## Description

### TECHNICAL FIELD

The present disclosure relates to a power supply unit for an aerosol-generating device.

### BACKGROUND ART

Inhalation devices that generate an aerosol with added flavor components and allow a user to inhale the generated aerosol are conventionally know as one type of aerosol-generating device. This kind of inhalation device typically generates the aerosol by heating an aerosol source by means of a heating unit, which is an electrically-resistive or inductively-heated heater, by supplying the heating unit with power from a power source.

PTL 1 below discloses an electronic cigarette device which allows a user to replace the power source. Furthermore, PTL 1 also discloses providing a reverse-direction battery protector so as to protect the power source and a control assembly from a reverse current which may be generated when a power source is installed with the polarity reversed.

### CITATION LIST

### PATENT LITERATURE

PTL 1: WO 2014/163664 A1

### SUMMARY OF INVENTION

### PROBLEM TO BE SOLVED BY THE INVENTION

There is a problem with the prior art, however, in that it is difficult to suitably control operation of the power supply unit on the basis of a cycle count value and/or state of health of the power source unit, after the power source unit has been replaced.

The present disclosure discloses a power supply unit for an aerosol-generating device, that enables operation of the power supply unit to be suitably controlled on the basis of the cycle count value and/or the state of health of a power source unit capable of storing power and configured to be removable from the power supply unit, also after said power source unit has been replaced.

### SOLUTION TO PROBLEM

The present disclosure relates to
a power supply unit for an aerosol-generating device which generates an aerosol from an aerosol source, the power supply unit comprising:
a connecting portion to which is connected a power source unit capable of storing power and configured to be removable from the power supply unit;
a memory unit for storing information indicating at least a cycle count value and/or state of health of the power source unit connected to the connecting portion; and
a control unit for controlling operation of the power supply unit on the basis of the cycle count value and/or the state of health, by referring to the information stored in the memory unit,
wherein
when the power source unit which was connected to the connecting portion has been replaced, the control unit resets the cycle count value and/or the state of health stored by the memory unit to a predetermined value.

### ADVANTAGEOUS EFFECTS OF INVENTION

The power supply unit for an aerosol-generating device according to the present disclosure enables operation of the power supply unit to be suitably controlled on the basis of the cycle count value and/or the state of health of a power source unit capable of storing power and configured to be removable from the power supply unit, also after said power source unit has been replaced.

### BRIEF DESCRIPTION OF DRAWINGS

[Fig. 1] is a schematic diagram illustrating a first configuration example of an inhalation device.
[Fig. 2] is a schematic diagram illustrating a second configuration example of an inhalation device.
[Fig. 3] is a diagram showing an example of the external configuration of an inhalation device 100.
[Fig. 4] is a diagram showing a first example of a mode of insertion/removal of a power source unit 111.
[Fig. 5] is a diagram showing a second example of a mode of insertion/removal of the power source unit 111.
[Fig. 6] is a diagram showing a third example of a mode of insertion/removal of the power source unit 111.
[Fig. 7] is a diagram showing configuration examples of the power source unit 111 and a control unit 116.
[Fig. 8] is a diagram showing an example of connected power source information acquired by an MCU 1161.
[Fig. 9] is a diagram showing an example of an operating check implemented by the MCU 1161.
[Fig. 10] is a diagram showing an example of a heating permission threshold table TBL defining heating permission thresholds.
[Fig. 11A] is a diagram (1 of 3) showing an example of reset processing performed by the MCU 1161.
[Fig. 11B] is a diagram (2 of 3) showing an example of reset processing performed by the MCU 1161.
[Fig. 11C] is a diagram (3 of 3) showing an example of reset processing performed by the MCU 1161.
[Fig. 12] is a flowchart showing an example of a control flow performed by the MCU 1161.
[Fig. 13] is a diagram showing an example of an information processing system for updating firmware of the power supply unit 110.

### EMBODIMENTS OF THE INVENTION

Embodiments of the power supply unit for an aerosol-generating device according to the present disclosure will be described in detail below with reference to the drawings. The drawings should be viewed in the orientation of the reference signs. The embodiments described below are an exemplary case in which the aerosol-generating device according to the present disclosure is applied to an inhalation device. It should be noted that not all of the features described in the following embodiments are essential to the present disclosure. Furthermore, two or more of the multiple features disclosed in the embodiments below may be combined in any way. Furthermore, hereinafter, identical or similar elements may be assigned identical or similar reference signs, and descriptions thereof may be omitted or simplified as appropriate.

### [1. Configuration example of inhalation device]

The inhalation device which constitutes one example of the aerosol-generating device according to the present disclosure, is a device for generating a substance to be inhaled by a user. Hereinafter, the substance generated by the inhalation device will be described as being an aerosol. Alternatively, the substance generated by the inhalation device may be a gas.

### <1-1. First configuration example of inhalation device>

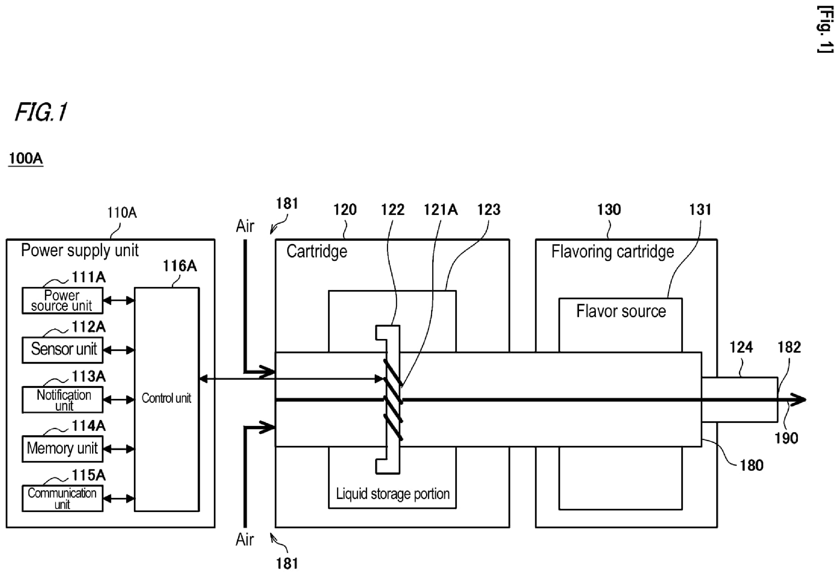

Fig. 1 is a schematic diagram schematically showing a first configuration example of an inhalation device. As shown in fig. 1, an inhalation device 100A according to this configuration example includes a power supply unit 110A, a cartridge 120, and a flavoring cartridge 130. The power supply unit 110A comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 comprises a flavor source 131 and a mouthpiece 124. An air flow path 180 is formed in the cartridge 120 and the flavoring cartridge 130.

The power source unit 111A stores electrical power. The power source unit 111A then supplies the electrical power to each component of the inhalation device 100A in accordance with control performed by the control unit 116A. Furthermore, the power source unit 111A is configured to be chargeable by means of power which the power supply unit 110A has received from an external power source. The external power source is an AC adapter (AC: alternating current), a mobile charger, a PC (personal computer), or the like, for example. The power source unit 111A may be configured, for example, by a rechargeable battery such as a lithium ion secondary battery.

Furthermore, the power source unit 111A is configured to be removable from the power supply unit 110A. That is, the inhalation device 100A enables the user to suitably replace the power source unit 111A, such as by removing an old power source unit 111A from the power supply unit 110A and installing a new power source unit 111A in the power supply unit 110A. A specific configuration example of a power source unit 111, which includes the power source unit 111A, will be described later and a description will therefore not be given here.

The sensor unit 112A acquires various types of information relating to the inhalation device 100A. The sensor unit 112A is configured by, for example, a pressure sensor such as a capacitor microphone, a flow rate sensor or a temperature sensor, etc., and acquires values associated with inhalation by a user.

As an example, the sensor unit 112A may include a pressure sensor (also referred to as a "puff sensor") capable of detecting a change in pressure (also referred to hereinafter as "internal pressure") in the inhalation device 100A caused by inhalation by the user. As another example, the sensor unit 112A may include a flow sensor capable of detecting a flow rate caused by inhalation by the user (hereinafter simply referred to as "flow rate"). As another example, the sensor unit 112A may include a temperature sensor (also referred to as a "puff thermistor") capable of detecting the temperature of the heating unit 121A or the temperature around the heating unit 121A.

Furthermore, the sensor unit 112A may include a voltage sensor capable of detecting a terminal voltage of the power source unit 111A. The sensor unit 112A may further include a temperature sensor capable of detecting the temperature of the power source unit 111A.

Furthermore, the sensor unit 112A may comprise an input device, such as an operation button or an operation switch, for accepting input of information from the user.

The notification unit 113A notifies the user of information. The notification unit 113A may be configured, for example, by a light-emitting device that emits light, a display device that displays images, a sound output device that outputs sound, or a vibration device that vibrates, etc. Here, the light-emitting device may be realized by a light-emitting element such as an LED (Light-Emitting Diode), and a drive circuit for causing the light-emitting element to emit light, and the like. Furthermore, the display device may be a liquid crystal display or an OLED display (OLED: Organic Light-Emitting Diode). The sound output device may be a speaker, for example. The vibration device may be a vibrator comprising a motor and an eccentric weight attached to a rotary shaft of the motor, for example.

The memory unit 114A stores various information (e.g., programs and data) for operation of the inhalation device 100A. The memory unit 114A may be configured by a non-volatile storage medium such as a flash memory, for example.

The communication unit 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area), for example.

The control unit 116A functions as an arithmetic processing device and a control device, and controls overall operation within the inhalation device 100A in accordance with various programs stored in the memory unit 114A, etc. For example, the control unit 116A controls the supply of electricity (power supply) from the power source unit 111A to each component (for example, the heating unit 121A to be described later), and controls charging of the power source unit 111A by means of power received from the external power source. The control unit 116A is realized by a CPU (central processing unit) or an electronic circuit such as a microprocessor (also referred to as an "MCU (micro controller unit)"), for example.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include a tobacco-derived or non-tobacco-derived flavor component. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol, for example. The heating unit 121A is formed by any material, such as a metal or polyimide, in any shape, such as coiled, film-like or blade-like. In the example shown in fig. 1, the heating unit 121A is configured as a coil obtained by winding a heating resistor such as nichrome or stainless steel, and is wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A.

As an example, electricity may be supplied from the power source unit 111A to the heating unit 121A when the sensor unit 112A has detected a heating request from the user. The heating request may comprise, for example, the user having started to inhale and/or predetermined information having been input. In this case, electrical supply to the heating unit 121A may be stopped when the sensor unit 112A has detected that the user has finished inhaling and/or that predetermined information has been input, or that a predetermined time has elapsed.

Moreover, the heating unit 121A may be configured to generate an aerosol by means of vibration or induction heating. When the aerosol is generated by means of vibration, the inhalation device 100A comprises a vibration unit as the heating unit 121A. For example, the vibration unit is configured by a plate-shaped member comprising a piezoelectric ceramic functioning as an ultrasonic vibrator. When the vibration unit vibrates, the aerosol source which has been guided to a surface of the vibration unit by means of the liquid guiding portion 122 is then atomized by means of ultrasound generated as the vibration unit vibrates, thereby generating the aerosol.

Furthermore, when the aerosol is generated by means of induction heating, the inhalation device 100A comprises a susceptor and an electromagnetic induction source as the heating unit 121A. The susceptor is made of an electrically conductive material, such as a metal, and generates heat by means of electromagnetic induction. Furthermore, the susceptor is disposed adjacent to the liquid guiding portion 122. As an example, the susceptor is formed by a metallic conducting wire and is wound around the liquid guiding portion 122. The electromagnetic induction source causes the susceptor to generate heat by electromagnetic induction. The electromagnetic induction source is formed by a coiled conducting wire, for example, and generates a magnetic field when supplied with an AC current from the power source unit 111A. When the magnetic field is generated, eddy currents are generated in the susceptor, and Joule heat is generated. The aerosol source held in the liquid guiding portion 122 is then heated by this Joule heat and atomized, generating the aerosol.

The flavor source 131 is a component for imparting a flavor component to the aerosol. The flavor source 131 includes tobacco-derived or non-tobacco-derived flavor components. The flavor source 131 may be, for example, a tobacco-derived substance such as cut tobacco, or a processed product obtained by molding a tobacco raw material into a granular form, a sheet form, or a powder form. Furthermore, the flavor source 131 may also include non-tobacco-derived materials made from plants other than tobacco (e.g., mint and herbs, etc.). As one example, the flavor source 131 may contain a flavoring component such as menthol. Furthermore, the flavor source 131 may be a stick-type member. When the inhalation device 100A is a medical inhaler, the flavor source 131 may contain a drug to be inhaled by a patient. It should be noted that the flavor source 131 is not limited to a solid, and may equally be a polyhydric alcohol such as glycerol or propylene glycol, or a liquid such as water containing flavor components, for example. Furthermore, the flavor source 131 may be disposed inside a container such as a capsule.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180, at the two ends thereof. Part way along the air flow path 180, the liquid guiding portion 122 is disposed on the upstream side (the side closer to the air inflow hole 181), and the flavor source 131 is disposed on the downstream side (the side closer to the air outflow hole 182). Air that flows in through the air inflow hole 181 as the user inhales is mixed with the aerosol generated by the heating unit 121A and is transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth and inhales, making it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example, may be adopted.

As an example, the inhalation device 100A need not include the flavoring cartridge 130. In this case, the mouthpiece 124 is provided on the cartridge 120.

As another example, the inhalation device 100A may further include a flavor source heating unit (not depicted) for heating the flavor source 131. The flavor source heating unit is configured in a film shape and is disposed so as to cover the outer periphery of the flavor source 131, for example. The flavor source heating unit then generates heat when supplied with power from the power source unit 111A, heating the flavor source 131 from the outer periphery thereof. It should be noted that the flavor source heating unit may also be configured with a blade-like form, piercing the flavor source 131 to heat the flavor source 131 from the inside, for example. Furthermore, the flavor source heating unit may be configured to heat the flavor source 131 by means of vibration or induction heating. Providing such a flavor source heating unit makes it possible to increase the temperature of the flavor source 131 and to increase the amount of flavor component added to the aerosol, as compared to a case in which the flavor source heating unit is not provided.

Furthermore, as another example, the inhalation device 100A may include a plurality of types of aerosol sources. A plurality of types of aerosol generated from the plurality of types of aerosol sources may be mixed within the air flow path 180 to cause a chemical reaction, thereby generating yet more other types of aerosol.

Furthermore, the means for atomizing the aerosol source is not limited to heating by the heating unit 121A. For example, the means for atomizing the aerosol source may be vibration atomization or induction heating.

### <1-2. Second configuration example of inhalation device>

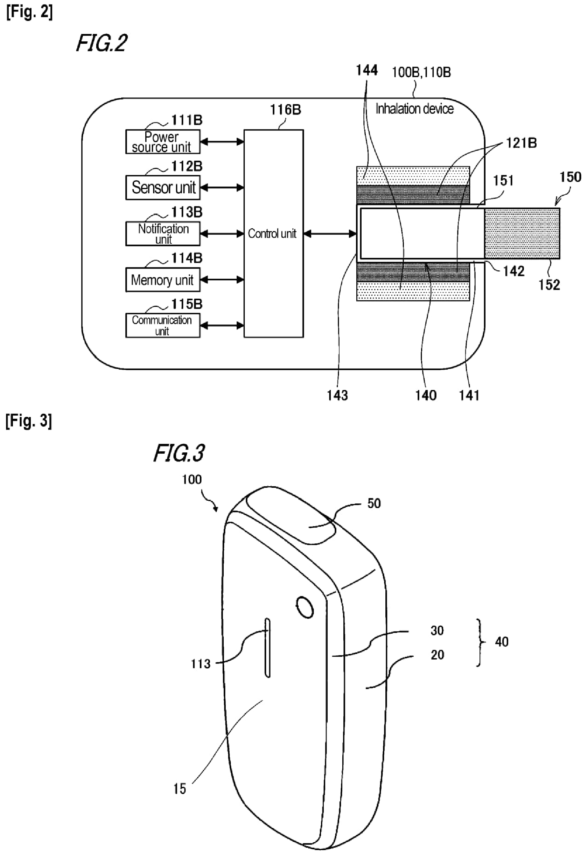

Fig. 2 is a schematic diagram schematically showing a second configuration example of an inhalation device. As shown in fig. 2, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144.

The power source unit 111B, sensor unit 112B, notification unit 113B, memory unit 114B, communication unit 115B, and control unit 116B are each substantially the same as the corresponding component included in the inhalation device 100A described above. Furthermore, in the case of the inhalation device 100B shown in fig. 2, the inhalation device 100B itself may also refer to the power supply unit 110B. That is, in this embodiment, the power source unit 111B is provided so as to be removable from the power supply unit 110B (in other words, the inhalation device 100B), so that the user can replace the power source unit 111B as required.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines the columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100B is a medical inhaler such as a nebulizer, the aerosol source may include a drug. The aerosol source may, for example, be a liquid such as water and a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path which is not depicted, and reaches the inside of the user's mouth together with the aerosol generated from the substrate portion 151.

In the example shown in fig. 2, the heating unit 121B is configured as a film heater formed by laying out a conductive track afforded by a heating resistor having a correlation between electrical resistance value and temperature, and is arranged to cover the outer circumference of the accommodating portion 140. Then, when the heating unit 121B generates heat, the substrate portion 151 of the stick-type substrate 150 is heated from the outer periphery, generating the aerosol. It should be noted that a heating resistor the same as that of the heating unit 121A described above may be used as the heating resistor of the heating unit 121B.

The heat insulating portion 144 prevents heat transfer from the heating unit 121B to other components. For example, the heat insulating portion 144 is configured from a vacuum heat insulating material or an aerogel heat insulating material, or the like.

A configuration example of the inhalation device 100B has been described above. The inhalation device 100B is, of course, not limited to the configuration described above, and various configurations, such as those illustrated below by way of example, may be adopted.

As one example, the heating unit 121B may be configured with a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer periphery of the accommodating portion 140, a blade-like second heating unit, and a third heating unit covering the bottom portion 143 of the accommodating portion 140.

As another example, the accommodating portion 140 may include an opening and closing mechanism such as a hinge for opening and closing part of an outer casing that forms the internal space 141. Then, by opening and closing the outer casing, the accommodating portion 140 may accommodate and clamp the stick-type substrate 150 that has been inserted into the internal space 141. In this case, the heating unit 121B may be provided on the clamping part of the accommodating portion 140, and may heat the stick-type substrate 150 while pressing the same.

Furthermore, the means for atomizing the aerosol source is not limited to heating by the heating unit 121B. For example, the means for atomizing the aerosol source may be induction heating. In that case, the inhalation device 100B comprises at least an electromagnetic induction source such as a coil for generating a magnetic field, instead of the heating unit 121B. A susceptor which generates heat by means of induction heating may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow path 180 according to the first configuration example, and the air flow path 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

Note that, hereinafter, the inhalation device 100A and the inhalation device 100B described above will also be referred to, without distinction, as the "inhalation device 100", and the power supply unit 110A and the power supply unit 110B will also be referred to, without distinction, as the "power supply unit 110". Similarly, the power source unit 111A and the power source unit 111B may be referred to as the "power source unit 111", the sensor unit 112A and the sensor unit 112B may be referred to as the "sensor unit 112", the notification unit 113A and the notification unit 113B may be referred to as the "notification unit 113", the memory unit 114A and the memory unit 114B may be referred to as the "memory unit 114", the communication unit 115A and the communication unit 115B may be referred to as the "communication unit 115", the control unit 116A and the control unit 116B may be referred to as the "control unit 116", and the heating unit 121A and the heating unit 121B may be referred to as the "heating unit 121".

### [2. Example of external configuration of inhalation device]

Fig. 3 is a diagram showing an example of the external configuration of the inhalation device 100. As shown in fig. 3, the inhalation device 100 comprises, for example, a case 20, and a shutter 50 slidably attached to the case 20.

The case 20 accommodates the power supply unit 110 of the inhalation device 100. The case 20 accommodates, for example, the power source unit 111 which is attached to the power supply unit 110, and a main body-side board unit 90 provided with an MCU, etc. for realizing the control unit 116, although this will be described in detail later.

A panel 30 is furthermore attached to the case 20. The panel 30 is attached to the case 20 to configure an outermost housing 40 of the inhalation device 100. The inhalation device 100 comprises the panel 30 so that even if the power supply unit 110 generates heat, the heat released to the outside can be lessened. That is to say, the panel 30 functions to provide insulation from the heat generated from the power supply unit 110. Furthermore, the panel 30 is formed with a substantially curved surface, and defines the internal space together with the surface of the case 20 when attached to the case 20.

When a user presses on the surface of the panel 30 with their fingertip, the panel 30 deforms to form an indentation toward the case 20. As a result of such deformation of the panel 30, a protrusion provided on the panel 30 comes into contact with an operation button (not depicted) provided on the surface of the case 20, and the operation button is thereby depressed. That is to say, the part of the surface of the panel 30 pressed with the fingertip constitutes an operation portion 15 for accepting user operations. It should be noted that the part indicated with the reference number 113 in fig. 3 is a part which transmits light from a light-emitting device provided inside the case 20, and is an example of the abovementioned notification unit 113.

The shutter 50 moves between a predetermined closed position and open position in response to a user action. When the shutter 50 is in the closed position, access to the inside of the case 20 (i.e., the inhalation device 100) is restricted, and when the shutter 50 is in the open position, access to the inside of the case 20 is permitted. As an example, when the shutter 50 is in the open position, the stick-type substrate 150 is permitted to access the inside of the accommodating portion 140.

### [3. Insertion/removal of power source unit]

As described above, the power source unit 111 of the inhalation device 100 is provided so as to be removable from the power supply unit 110. Specific examples of modes of insertion/removal of the power source unit 111 will be described below. It should be noted that in the inhalation device 100, the direction of insertion and removal of the flavor source 131 and the stick-type substrate 150 relative to the inhalation device 100 will be described below as a vertical direction, and the side of the inhalation device 100 on which the flavor source 131 and the stick-type substrate 150 are inserted will be defined as an upper side. In other words, the flavor source 131 or the stick-type substrate 150 is inserted into the inhalation device 100 from above. Furthermore, a direction orthogonal to the vertical direction may be referred to as a transverse direction, and the face oriented in the transverse direction may be referred to as a side face.

Furthermore, first to third examples of modes of insertion/removal of the power source unit 111 will be described below, but these are not limiting. That is to say, the power source unit 111 may be provided in the power supply unit 110 in such a way as to be removable in ways other than those described below in the first to third examples.

### <3-1. First example of mode of insertion/removal of power source unit>

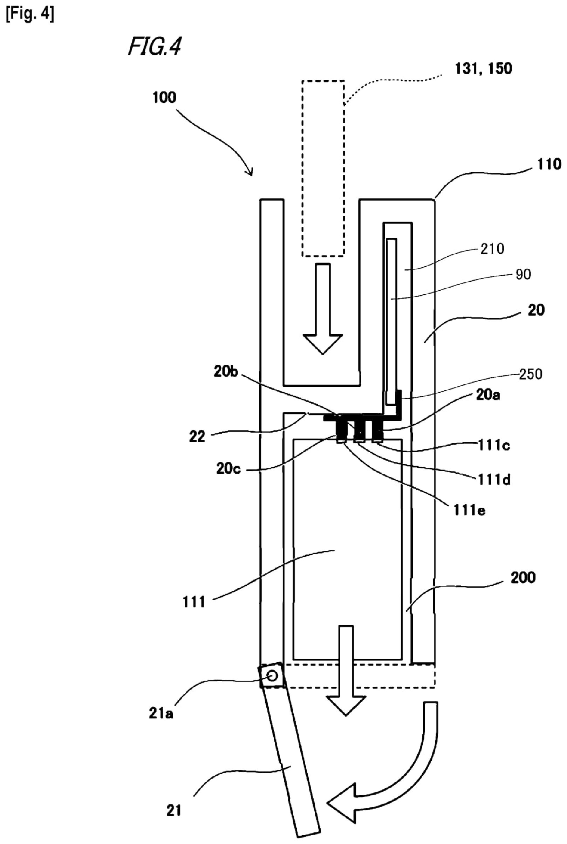

Fig. 4 is a diagram showing a first example of a mode of insertion/removal of the power source unit 111. As shown in fig. 4, the case 20 has a bottom wall portion 21 constituting at least part of a lower face of the case 20. The bottom wall portion 21 is provided on the case 20 so as to be openable/closable about a hinge portion 21a extending in the transverse direction.

A power source accommodating portion 200 capable of accommodating the power source unit 111 is formed in a lower region of the case 20. When the bottom wall portion 21 is open, the power source accommodating portion 200 communicates with the outside of the case 20 to allow insertion of the power source unit 111 into the power source accommodating portion 200 from below the case 20.

Furthermore, a board accommodating portion 210 is formed in an upper region of the case 20. The board accommodating portion 210 accommodates the main body-side board unit 90 (to be described later) which comprises an IC (integrated circuit), etc. constituting the abovementioned control unit 116. The main body-side board unit 90 is electrically connected via a flexible cable 250, for example, to the power source unit 111 accommodated in the power source accommodating portion 200. This allows power to be supplied from the power source unit 111 accommodated in the power source accommodating portion 200 to the main body-side board unit 90.

To describe this more specifically, a positive terminal connecting portion 20a, a negative terminal connecting portion 20b, and a temperature terminal connecting portion 20c are provided in the case 20 correspondingly with a positive terminal 111c, a negative terminal 111d, and a temperature terminal 111e, respectively, of the power source unit 111. In the example shown in fig. 4, the positive terminal 111c, the negative terminal 111d, and the temperature terminal 111e of the power source unit 111 are all provided on an upper face of the power source unit 111, and the positive terminal connecting portion 20a, the negative terminal connecting portion 20b, and the temperature terminal connecting portion 20c of the case 20 are all provided on an upper wall portion 22 of the power source accommodating portion 200.

The positive terminal 111c, negative terminal 111d, and temperature terminal 111e of the power source unit 111 will be described in detail later and will therefore not be described here. Furthermore, the positive terminal connecting portion 20a, negative terminal connecting portion 20b, and temperature terminal connecting portion 20c may be referred to collectively below as a "connecting portion 20x". The connecting portion 20x is an example of the connecting portion of the power supply unit for an aerosol-generating device according to the present disclosure.

When it is accommodated in the power source accommodating portion 200, the power source unit 111 is held by means of the bottom wall portion 21 and the upper wall portion 22 of the power source accommodating portion 200. At this point, the power source unit 111 is held in a state in which the positive terminal 111c thereof is electrically connected to the positive terminal connecting portion 20a of the case 20, the negative terminal 111d is electrically connected to the negative terminal connecting portion 20b, and the temperature terminal 111e is electrically connected to the temperature terminal connecting portion 20c.

Furthermore, when the bottom wall portion 21 is opened while the power source unit 111 is accommodated in the power source accommodating portion 200, the power source accommodating portion 200 communicates with the outside of the case 20, and the power source unit 111 can be removed from the power source accommodating portion 200.

### <3-2. Second example of mode of insertion/removal of power source unit>

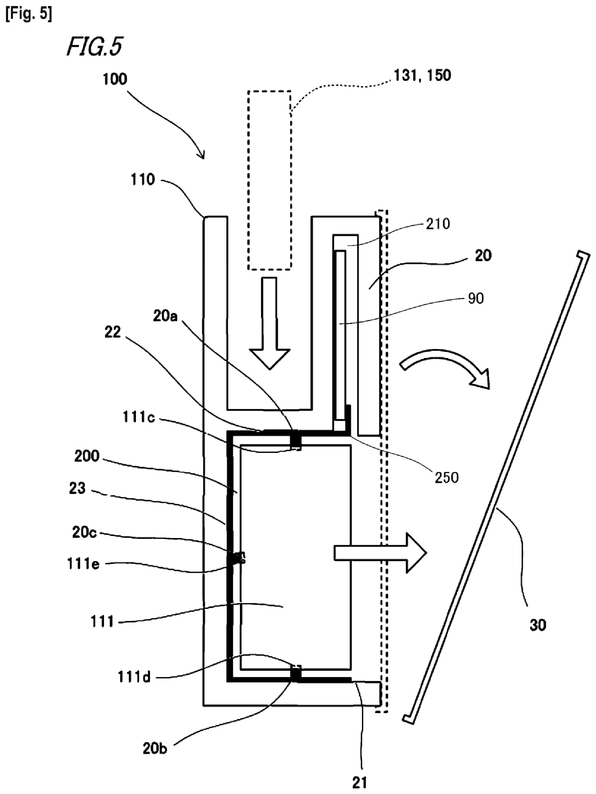

Fig. 5 is a diagram showing a second example of a mode of insertion/removal of the power source unit 111. It should be noted that the description here will focus on differences with the description of fig. 4, and elements which are common to the description of fig. 4 will be omitted or simplified as appropriate.

In the example shown in fig. 5, when the panel 30 is detached from the case 20, the power source accommodating portion 200 communicates with the outside of the case 20, and the power source unit 111 can be inserted into the power source accommodating portion 200 from the transverse direction of the case 20.

In the example shown in fig. 5, the positive terminal 111c is provided on the upper face of the power source unit 111, the negative terminal 111d is provided on a lower face of the power source unit 111, and the temperature terminal 111e is provided on a side face of the power source unit 111. For this reason, the positive terminal connecting portion 20a is provided on the upper wall portion 22 of the power source accommodating portion 200 correspondingly with the positive terminal 111c, the negative terminal connecting portion 20b is provided on the bottom wall portion 21 of the power source accommodating portion 200 correspondingly with the negative terminal 111d, and the temperature terminal connecting portion 20c is provided on a side wall portion 23 of the power source accommodating portion 200 correspondingly with the temperature terminal 111e.

Furthermore, in the example shown in fig. 5, when the panel 30 is detached from the case 20 while the power source unit 111 is accommodated in the power source accommodating portion 200, the power source accommodating portion 200 communicates with the outside of the case 20, and the power source unit 111 can be removed from the power source accommodating portion 200.

### <3-3. Third example of mode of insertion/removal of power source unit>

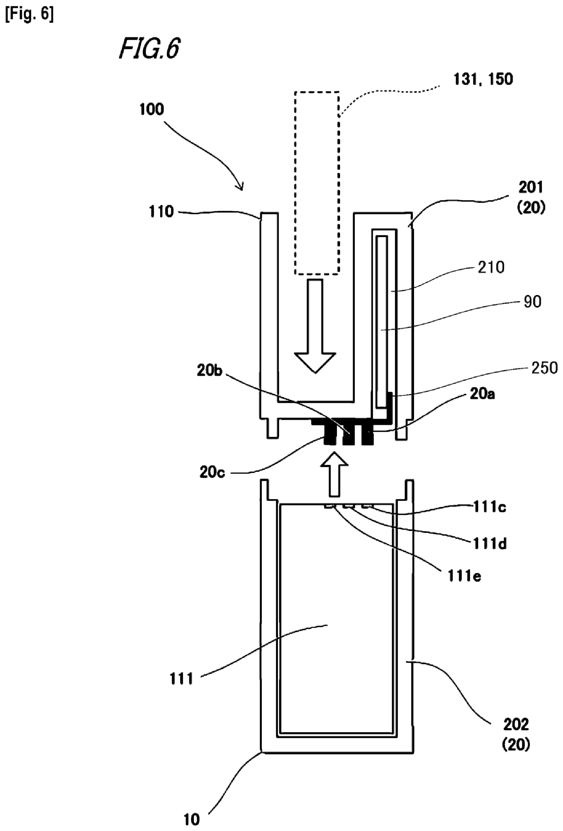

Fig. 6 is a diagram showing a third example of a mode of insertion/removal of the power source unit 111. It should be noted that the description here will focus on differences with the description of fig. 4 or 5, and elements which are common to the description of fig. 4 or 5 will be omitted or simplified as appropriate.

In the example shown in fig. 6, the case 20 comprises an upper case 201 constituting the exterior of an upper-side region of the inhalation device 100, and a lower case 202 constituting the exterior of a lower-side region of the inhalation device 100.

The lower case 202 is open at an upper face and internally accommodates the power source unit 111. In the example shown in fig. 6, the power source unit 111 and the lower case 202 thus form a modular battery pack 10.

The battery pack 10 is attached to the upper case 201 from below. As an example, the upper case 201 and the lower case 202 both have a substantially cylindrical shape extending in the vertical direction, a threaded groove is machined on an outer circumferential surface of either a lower end portion of the upper case 201 or an upper end portion of the lower case 202, and on an inner circumferential surface of the other of the lower end portion of the upper case 201 and the upper end portion of the lower case 202, and the lower end portion of the upper case 201 and the upper end portion of the lower case 202 are screwed together, whereby the battery pack 10 is attached to the upper case 201.

As another example, a magnet may be provided on one of the lower end portion of the upper case 201 and the upper end portion of the lower case 202, while the other of the lower end portion of the upper case 201 and the upper end portion of the lower case 202 may be formed by a ferromagnetic material, and the lower end portion of the upper case 201 and the upper end portion of the lower case 202 may be attracted by the magnetic force of the magnet, whereby the battery pack 10 may be attached to the upper case 201. As a further example, the lower case 202 may have a locking portion in the shape of a hook or similar, and the locking portion may be locked to the upper case 201, whereby the battery pack 10 may be attached to the upper case 201.

While the battery pack 10 is attached to the upper case 201, the power source unit 111 is held in a state in which the positive terminal 111c is electrically connected to the positive terminal connecting portion 20a, the negative terminal 111d is electrically connected to the negative terminal connecting portion 20b, and the temperature terminal 111e is electrically connected to the temperature terminal connecting portion 20c.

### [4. Configuration examples of power source unit and control unit]

### <4-1. Configuration example of power source unit>

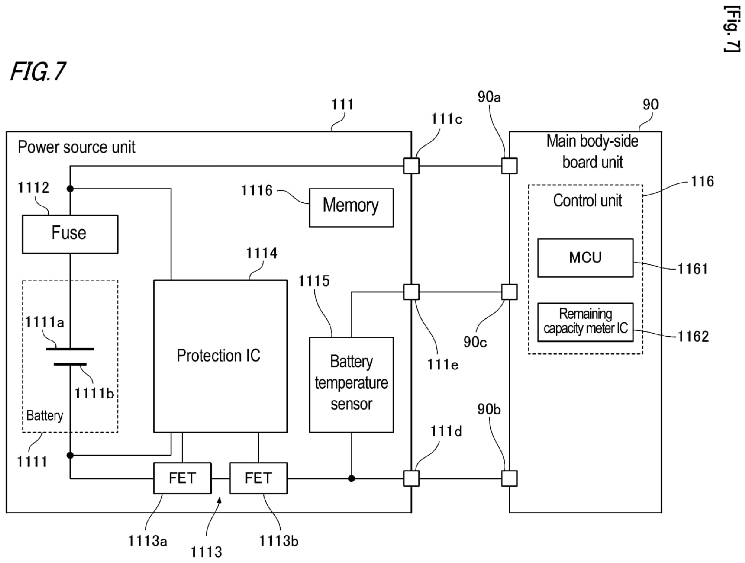

Fig. 7 is a diagram showing configuration examples of the power source unit 111 and the control unit 116. As shown in fig. 7, the power source unit 111 comprises, for example: a battery 1111, a fuse 1112, a switch circuit 1113, a protection IC 1114, a battery temperature sensor 1115, the positive terminal 111c, the negative terminal 111d, and the temperature terminal 111e.

The battery 1111 is a secondary battery comprising a positive terminal 1111a and a negative terminal 1111b, and is configured to be capable of outputting a terminal voltage of around 4 [V] between the positive terminal 1111a and the negative terminal 1111b, for example. Various types of secondary batteries may be used as the battery 1111, for example a lithium ion secondary battery or a nickel-metal hydride battery

The positive terminal 1111a of the battery 1111 is connected via the fuse 1112 to the positive terminal 111c, which is an input/output terminal on the high-potential side of the power source unit 111. Furthermore, the negative terminal 1111b of the battery 1111 is connected via the switch circuit 1113 to the negative terminal 111d, which is an input/output terminal on the low-potential side of the power source unit 111. The power source unit 111 can therefore output the terminal voltage of the battery 1111 as the terminal voltage between the positive terminal 111c and the negative terminal 111d. The output voltage of the power source unit 111 will also be referred to below as the "power source voltage Vbat".

When the power source unit 111 is properly attached to the power supply unit 110, the positive terminal 111c of the power source unit 111 is electrically connected to a positive terminal 90a of the power supply unit 110 (that is, the inhalation device 100), and the negative terminal 111d of the power source unit 111 is electrically connected to a negative terminal 90b of the power supply unit 110.

In this embodiment, the positive terminal 90a and the negative terminal 90b of the power supply unit 110 are provided on the main body-side board unit 90 which is constructed by mounting various types of electronic components including ICs constituting the control unit 116 on a printed wiring board (PWB). The ICs constituting the control unit 116 may include an MCU 1161 and a remaining capacity meter IC 1162, etc., which will be described later.

The fuse 1112 is a protective element which breaks the electrical connection between the positive terminal 1111a and the positive terminal 111c by blowing when a current at or above a predetermined value flows therethrough. By providing a fuse 1112 such as this, even if an overcurrent, which is a current at or above the predetermined value, is output from the battery 1111, it is possible to prevent this overcurrent from being output from the power source unit 111, and to protect the main body-side board unit 90 from the overcurrent.

The switch circuit 113 is a circuit functioning as a switch to turn charging and discharge of the power source unit 111 (more specifically, the battery 1111) ON and OFF. In this embodiment, the switch circuit 1113 is constructed by series-connecting a first FET 1113a and a second FET 1113b.

The first FET 1113a and second FET 1113b can each be N-channel Metal-Oxide-Semiconductor Field Effect Transistors (MOSFETs), for example. In this case, a source terminal of the first FET 1113a is connected to the negative terminal 1111b of the battery 1111, a drain terminal of the first FET 1113a is connected to a drain terminal of the second FET 1113b, and a gate terminal of the first FET 1113a is connected to the protection IC 1114. Furthermore, a source terminal of the second FET 1113b is connected to the negative terminal 111d, and a gate terminal of the second FET 1113b is connected to the protection IC 1114.

The protection IC 1114 is connected to each of the positive terminal 1111a and the negative terminal 1111b of the battery 1111, and is capable of acquiring the terminal voltage of the battery 1111. The protection IC 1114 then controls the switch circuit 1113 based on the terminal voltage of the battery 1111. In this embodiment, the protection IC 1114 controls the gate voltage of the first FET 1113a and can thereby turn the first FET 1113a ON (in other words to a state of conduction) and OFF (in other words to a disconnected state). Similarly, the protection IC 1114 controls the gate voltage of the second FET 1113b and can thereby turn the second FET 1113b ON and OFF.

For example, if the terminal voltage of the battery 1111 reaches a predetermined upper limit value during charging of the power source unit 111 (i.e., the battery 1111), the protection IC 1114 turns the second FET 1113b OFF to thereby stop charging of the power source unit 111. This makes it possible to inhibit overcharging of the power source unit 111.

Furthermore, if the terminal voltage of the battery 1111 reaches a predetermined lower limit value during discharge from the power source unit 111, the protection IC 1114 turns the first FET 1113a OFF to thereby stop discharge from the power source unit 111. This makes it possible to inhibit over-discharge of the power source unit 111.

The protection IC 1114 is also configured to control the switch circuit 1113 on the basis of a current value of a current flowing to a conducting wire (i.e., a power line to which ground potential can be applied) connecting the negative terminal 1111b and the negative terminal 111d.

For example, if a current at above a predetermined value flows to the conducting wire connecting the negative terminal 111d and the negative terminal 1111b during charging of the power source unit 111, the protection IC 1114 may turn the second FET 1113b OFF to thereby stop charging of the power source unit 111. The power source unit 111, etc. can thus be protected from overcurrents that might be generated during charging of the power source unit 111.

Furthermore, if a current at above a predetermined value flows to the conducting wire connecting the negative terminal 111d and the negative terminal 1111b during discharge from the power source unit 111, the protection IC 1114 may turn the first FET 1113a OFF to thereby stop discharge from the power source unit 111. The main body-side board unit 90, etc. can thus be protected from overcurrents that might be generated during discharge from the power source unit 111.

The battery temperature sensor 1115 is a temperature sensor capable of detecting the temperature of the power source unit 111 (also referred to below as the "battery temperature Tbat"). In this embodiment, the battery temperature sensor 1115 is an NTC thermistor configured by a resistor having NTC characteristics, or a PTC thermistor configured by a resistor having PTC characteristics, and is disposed in close proximity to the battery 1111 One end of the battery temperature sensor 1115 (more specifically the resistor) is then connected to the temperature terminal 111e, and the other end thereof is connected to the negative terminal 111d.

When the power source unit 111 is properly attached to the power supply unit 110, the temperature terminal 111e of the power source unit 111 is electrically connected to a temperature terminal 90c of the power supply unit 110 (that is, the inhalation device 100). In this case, a potential difference commensurate with an amount of voltage drop due to the battery temperature sensor 1115, which is a thermistor, is therefore produced between the temperature terminal 90c and the negative terminal 90b of the main body-side board unit 90. Moreover, in this embodiment, the temperature terminal 90c is also provided on the main body-side board unit 90, similarly to the positive terminal 90a and the negative terminal 90b. The group of terminals of the main body-side board unit 90, namely the positive terminal 90a, the negative terminal 90b, and the temperature terminal 90c, are another example of the connecting portion of the power supply unit for an aerosol-generating device according to the present disclosure.

Furthermore, the power source unit 111 further comprises a memory 1116, for example. The memory 1116 is configured by a non-volatile memory such as an EPROM (erasable programmable read-only memory) or a flash memory, and stores information indicating a power source ID, which is an identifier enabling the power source unit 111 in which the memory 1116 is provided to be uniquely identified. The information indicating the power source ID will also be referred to below as "power source ID information".

The power source unit 111 is configured so that, when the power source unit 111 is properly attached to the power supply unit 110, the control unit 116 (e.g., the MCU 1161) of the power supply unit 110 is able to acquire the power source ID information stored in the memory 1116.

As an example, when the power source unit 111 is properly attached to the power supply unit 110, the memory 1116 is electrically connected to a predetermined IC (e.g., the MCU 1161) among the ICs constituting the control unit 116, via signal lines and terminals, etc. which are not depicted. This allows the predetermined IC to acquire the power source ID stored in the memory 1116 by accessing the memory 1116. As another example, the memory 1116 and a predetermined IC may be provided in such a way as to be able to communicate by way of contactless communication such as NFC.

It should be noted that in the example described here, the power source unit 111 also includes components other than the battery 1111, but this is not limiting. For example, the power source unit 111 may be configured solely by the battery 1111, and the components other than the battery 1111 may be provided in the power supply unit 110 (e.g., the main body-side board unit 90). Furthermore, the components other than the battery 1111 may be provided in an intermediate member (a relay member in other words) provided, electrically, between the battery 1111 and the main body-side board unit 90. Furthermore, the components other than the battery 1111 may also be omitted, as appropriate.

### <4-2. Configuration example of control unit>

As shown in fig. 7, the control unit 116 comprises the MCU 1161 and the remaining capacity meter IC 1162, for example. The MCU 1161 and the remaining capacity meter IC 1162 are provided in such a way as to be capable of communicating with each other via signal lines, etc. which are not depicted. The functions of the control unit 116 in this embodiment are realized by collaboration between multiple ICs of the main body-side board unit 90, such as the MCU 1161 and the remaining capacity meter IC 1162, for example. Furthermore, some functions of the control unit 116 may equally be realized by the MCU 1161 alone, for example.

The MCU 1161 is an IC for general control (a computer in other words) of the power supply unit 110 (i.e., the inhalation device 100). The MCU 1161 controls charging and/or discharging of the power source unit 111 attached to the power supply unit 110, based on information acquired from the remaining capacity meter IC 1162, etc., and controls the abovementioned notification unit 113 (e.g., light-emitting device, display device or vibration device) to give predetermined notifications. An example of the control performed by the MCU 1161 will be described in detail later and will therefore not be described here.

The remaining capacity meter IC 1162 is an IC for deriving the remaining capacity of the power source unit 111 (also referred to below as the "remaining battery capacity Cbat") attached to the power supply unit 110, i.e., of the power source unit 111 connected to the connecting portion 20x.

In this embodiment, the remaining capacity meter IC 1162 derives the remaining battery capacity Cbat on the basis of the power source voltage Vbat and the battery temperature Tbat, etc. The power source voltage Vbat can be acquired by measuring, with a voltage sensor or the like, the potential difference between the positive terminal connecting portion 20a and the negative terminal connecting portion 20b, for example. The battery temperature Tbat can be acquired by measuring, with a voltage sensor or the like, the amount of voltage drop due to the battery temperature sensor 1115, that is, the potential difference between the temperature terminal connecting portion 20c and the negative terminal connecting portion 20b.

As an example, the remaining capacity meter IC 1162 derives the remaining battery capacity Cbat corresponding to a combination of the current power source voltage Vbat and battery temperature Tbat by using a table or calculation formula defining the relationship between the remaining battery capacity Cbat and a combination of the power source voltage Vbat and the battery temperature Tbat. A more accurate remaining battery capacity Cbat can thus be derived by deriving the remaining battery capacity Cbat while taking account not only of the power source voltage Vbat but also of the battery temperature Tbat, as compared to when the remaining battery capacity Cbat is derived using only the power source voltage Vbat. The remaining capacity meter IC 1162 may equally derive the remaining battery capacity Cbat by also using a cycle count value and/or SOH, to be described later. A more accurate remaining battery capacity Cbat can thus be derived.

After deriving the remaining battery capacity Cbat, the remaining capacity meter IC 1162 outputs information indicating the remaining battery capacity Cbat to the MCU 1161. This enables the MCU 1161 to acquire the current remaining battery capacity Cbat. The information indicating the remaining battery capacity Cbat will also be referred to below as "remaining battery capacity information".

Furthermore, the remaining capacity meter IC 1162 may also output information indicating the power source voltage Vbat and the battery temperature Tbat to the MCU 1161. This enables the MCU 1161 to also acquire the current power source voltage Vbat and battery temperature Tbat. The information indicating the power source voltage Vbat will also be referred to below as "power source voltage information", and the information indicating the battery temperature Tbat will also be referred to below as "battery temperature information".

Furthermore, in this embodiment, the remaining capacity meter IC 1162 increments a cycle count of the power source unit 111 based on the remaining battery capacity Cbat, and stores a count value thereof. For example, the cycle count here is a count of the number of times that charging was performed to the equivalent of a total state of charge (SOC) of 100 [%] of the power source unit 111 (more specifically the battery 1111), or the number of times that discharging was performed to the equivalent of a total SOC of 100 [%], assuming each of these 100 [%] equivalents to be one cycle, and is also referred to as a "full charge cycle". The count value of the cycle count (also referred to below as the "cycle count value") obtained by the remaining capacity meter IC 1162 is stored in a non-volatile memory (e.g., a memory 1162a which will be described later) of the remaining capacity meter IC 1162, for example. It should be noted that this non-volatile memory may equally be provided outside the remaining capacity meter IC 1162 in a form accessible to the remaining capacity meter IC 1162.

In this embodiment, the remaining capacity meter IC 1162 also derives the state of health (SOH) of the power source unit 111 based on the power source voltage Vbat and the cycle count value, and stores the derived SOH. The SOH derived by means of the remaining capacity meter IC 1162 is also stored in the abovementioned non-volatile memory of the remaining capacity meter IC 1162, for example, similarly to the cycle count value. Furthermore, the MCU 1161 can acquire information indicating the stored cycle count value and SOH, by referring to this non-volatile memory, as appropriate, for example. Information indicating the cycle count value will also be referred to below as "cycle count information", and information indicating the SOH will also be referred to below as "SOH information".

### [5. Example of control by MCU]

As described above, the power source unit 111 is removable from the power supply unit 110 of the inhalation device 100 to allow the user to replace the power source unit 111. Accordingly, when the power source unit 111 deteriorates due to repeated charging and discharging, and the performance thereof degrades, the user is able to replace the deteriorated power source unit with a new power source unit 111 to enable full use of the inhalation device 100 once again.

On the other hand, allowing the user to replace the power source unit 111 does not necessarily mean that a suitable power source unit 111 will be properly attached. For example, it is also feasible that there will be a problem with the power source unit 111 after replacement (i.e., the newly attached power source unit 111), for instance the power source unit 111 after replacement being incompatible with the power supply unit 110 in terms of hardware or software. Furthermore, it is also feasible that the power source unit 111 after replacement will not be properly attached to the power supply unit 110, for instance the power source unit 111 after replacement being reverse-connected to the connecting portion 20x due to a mistake by the user, or foreign material such as dust adhering to the connecting portion 20x during the operation to replace the power source unit 111.

There is thus a risk of a malfunction in the power supply unit 110 if there is some kind of fault such as a problem in the power source unit 111 after replacement or the power source unit 111 after replacement not being properly attached to the power supply unit 110, and the power supply unit 110 is operated as normal without taking this fault into account, which is undesirable from the perspective of ensuring safety of the power supply unit 110 and/or user convenience.

When the power source unit 111 connected to the connecting portion 20x has been replaced, the MCU 1161 (that is, the control unit 116) therefore implements a predetermined operating check, and controls operation of the power supply unit 110 on the basis of the result of this operating check.

In the operating check, the MCU 1161 acquires information relating to the power source unit 111 after replacement (also referred to below as "connected power source information"), for example. Based on the connected power source information that has been acquired, the MCU 1161 then detects faults relating to the power source unit 111 after replacement and/or faults relating to the connecting portion 20x connected to the power source unit 111 after replacement.

The connected power source information includes, for example, information relating to the remaining battery capacity Cbat, the power source voltage Vbat, the SOH, the battery temperature Tbat, or the power source ID, etc. of the power source unit 111 after replacement, although this will be described in detail later. The MCU 1161 can then detect faults such as described above by determining on the basis of this connected power source information whether or not the remaining battery capacity Cbat, the power source voltage Vbat, the SOH, the battery temperature Tbat, or the power source ID, etc. meets a predetermined condition. Note that the connected power source information and operating check will be described in detail later and will therefore not be described here.

The operating check is implemented when the power source unit 111 has been replaced, and the power supply unit 110 is controlled on the basis of results thereof, whereby it is possible to inhibit the power supply unit 110 from being operated as normal despite there being some kind of fault relating to the power source unit 111 or the connecting portion 20x. Better safety of the power supply unit 110 and/or better user convenience can therefore be envisaged.

The MCU 1161 can detect that the power source unit 111 connected to the connecting portion 20x has been replaced, based on a potential difference being generated between the positive terminal connecting portion 20a and the negative terminal connecting portion 20b, in other words, based on the potential difference between the positive terminal connecting portion 20a and the negative terminal connecting portion 20b transitioning from 0 [V] to a state of greater than 0 [V]. The potential difference between the positive terminal connecting portion 20a and the negative terminal connecting portion 20b can be acquired by measurement using a voltage sensor, etc., for example. As another example, the MCU 1161 may detect that the power source unit 111 connected to the connecting portion 20x has been replaced, based on a change in the power source ID of the power source unit 111 connected to the connecting portion 20x.

For example, the MCU 1161 implements the operating check in response to the power source unit 111 connected to the connecting portion 20x having been replaced. This enables the operating check to be implemented automatically, triggered by the power source unit 111 having been replaced. It is therefore possible to reduce the amount of effort needed by the user to cause the operating check to be implemented, as compared to when the user also needs to perform another action in addition to replacing the power source unit 111 in order for the operating check to be implemented.

As another example, the MCU 1161 may implement the operating check in response to a predetermined user action after the power source unit 111 connected to the connecting portion 20x has been replaced. The operating check can thus be implemented pending a predetermined user action.

For example, a user who is unfamiliar with replacing the power source unit 111 may not be able to judge correctly whether they have been able to properly attach the power source unit 111, which might also lead to such a user repeatedly inserting and removing the power source unit 111 during replacement. If the operating check is automatically implemented in response to the power source unit 111 having been connected to the connecting portion 20x, the operating check is therefore also repeatedly implemented when the power source unit 111 is repeatedly inserted and removed as described above, which could lead to greater power consumption.

In contrast to this, with a configuration in which implementation of the operating check is triggered by a predetermined user action after the power source unit 111 connected to the connecting portion 20x has been replaced, the operating check can be implemented once a timing has been reached at which the user would be expected to have completed replacement of the power source unit 111. This makes it possible to inhibit the operating check from being repeatedly implemented, consuming more power, even if the user repeatedly inserts and removes the power source unit 111 while replacing the power source unit 111.

It should be noted that the predetermined action here is preferably an action that might be performed once the user has determined that replacement of the power source unit 111 is complete, in other words, an action that would be expected after replacement of the power source unit 111 is complete. As an example, the predetermined action may be pressing of an operation button (e.g., an operation button on the operating portion 15) provided on the inhalation device 100. As another example, the predetermined action may be an action to attach, to the power supply unit 110, the panel 30 which is a cover member for covering the power source accommodating portion 200 in which the power source unit 111 is accommodated. As yet another example, the predetermined action may be an action to input information to the effect that replacement of the power source unit 111 is complete to the power supply unit 110 via another device (e.g., a terminal device such as the user's smartphone) capable of communicating with the power supply unit 110. Furthermore, the predetermined action may be a combination of multiple actions, for example a combination of attaching the panel 30 and pressing the operation button. The MCU 1161 can detect that there has been a predetermined operation based on information acquired by the sensor unit 112 or the communication unit 115.

The MCU 1161 prohibits at least a portion of operations of the power supply unit 110 based on the result of the operating check. Specifically, the MCU 1161 prohibits at least a portion of operations of the power supply unit 110 when a fault has been detected by the operating check. This makes it possible to inhibit a fault where all of the functions of the power supply unit 110 are enabled for operation as normal, despite there being some kind of fault relating to the power source unit 111 or the connecting portion 20x after replacement of the power source unit 111.

Meanwhile, the MCU 1161 allows the power supply unit 110 to operate as normal, without prohibiting the portion of operations, when no fault has been detected by the operating check. This makes it possible to allow the power supply unit 110 to operate as normal when there is no fault relating to the power source unit 111 or the connecting portion 20x after replacement of the power source unit 111, that is, when the power source unit 111 has been suitably replaced. Furthermore, in this case, the MCU 1161 may be configured to notify the user, via the notification unit 113, for example, that replacement of the power source unit 111 has been correctly completed and/or that the power supply unit 110 (i.e., the inhalation device 100) is in a usable state.

The portion of operations which are prohibited on the basis of the result of the operating check includes electrical supply from the power source unit 111 to the heating unit 121, i.e., generation of the aerosol by the heating unit 121. This makes it possible to inhibit a fault where electricity is supplied to the heating unit 121, which handles a large amount of power, despite there being some kind of fault relating to the power source unit 111 or the connecting portion 20x after replacement of the power source unit 111.

Furthermore, the portion of operations which are prohibited on the basis of the result of the operating check includes charging of the power source unit 111, for example. This makes it possible to inhibit a fault where electricity is supplied to the power source unit 111, despite there being some kind of fault relating to the power source unit 111 or the connecting portion 20x after replacement of the power source unit 111.

Furthermore, the MCU 1161 may cause the power supply unit 110 to transition from sleep mode to active mode when a fault has been detected by the operating check. Here, sleep mode may be understood as a mode in which electricity is supplied only to the minimum number of components required for controlling operation of the power supply unit 110 (that is, a low power consumption mode). Meanwhile, active mode may be understood as a mode in which electricity is supplied to the minimum number of components required for controlling operation of the power supply unit 110, and also to other components (e.g., the heating unit 121).

Furthermore, when a fault has been detected by the operating check, the MCU 1161 may be configured to notify the user, via the notification unit 113, of the fault detected and/or a recommendation in response to the fault detected, for example. The recommendation here means an action that should be undertaken by the user in order to resolve the fault detected by the operating check, for example. By notifying the user of the fault detected and/or a recommendation in response to the fault detected, the user can thus be prompted to take appropriate action to resolve the fault.

For example, when the notification unit 113 comprises a light-emitting device, the notification may be given by causing this light-emitting device to emit light in a predetermined light emission mode. The light emission mode here is, for example, a color of light emission, a number of emissions of light (e.g., the number of light-emitting elements being caused to emit light), or a light emission pattern (e.g., flashing), or the like. When the notification unit 113 comprises a vibration device, the notification may be given by causing this vibration device to vibrate in a predetermined vibration mode. The vibration mode here is, for example, a vibration pattern (e.g., a manner of vibration), intensity of vibration, frequency of vibration, or a vibration time for which vibration lasts, or the like. When the notification unit 113 comprises a display device, the notification may be given by causing this display device to display a predetermined image (e.g., what is known as an "icon") or a predetermined message (i.e., a string of characters).

Furthermore, the MCU 1161 may send, via the communication unit 115, information indicating the fault detected and/or a recommendation in response to the fault detected, to another device (e.g., a terminal device such as the user's smartphone) capable of communicating with the power supply unit 110, to thereby provide the abovementioned notification on that other device. It should be noted that a specific example of the notification given on the basis of the result of the operating check will be described below.

### (Example of connected power source information acquired by MCU)

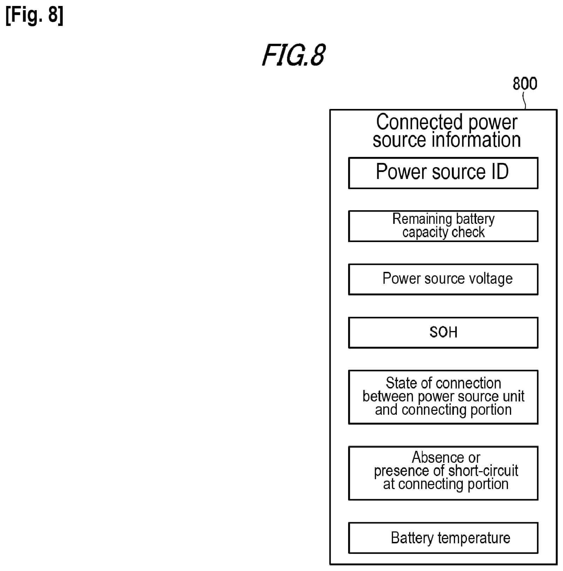

Fig. 8 is a diagram showing an example of connected power source information acquired by the MCU 1161. As shown in fig. 8, the MCU 1161 acquires connected power source information 800 including, for example, each of: power source ID, remaining battery capacity Cbat, power source voltage Vbat, SOH, state of connection between the power source unit 111 and the connecting portion 20x, absence or presence of a short-circuit at the connecting portion 20x, and battery temperature Tbat.

As described above, the power source ID information, which is information indicating the power source ID, can be acquired from the memory 1116 of the power source unit 111, for example. Furthermore, the remaining battery capacity information, which is information indicating the remaining battery capacity Cbat, the power source voltage information, which is information indicating the power source voltage Vbat, the SOH information, which is information indicating the SOH, and the battery temperature information, which is information indicating the battery temperature Tbat, can be acquired from the remaining capacity meter IC 1162, for example.

Furthermore, connection state information, which is information indicating the state of connection between the power source unit 111 and the connecting portion 20x, may be understood as information indicating whether or not there is a regular state of connection between the power source unit 111 and the connecting portion 20x. For example, if the potential difference between the positive terminal connecting portion 20a and the negative terminal connecting portion 20b is within a predetermined range greater than 0 [V] and the potential of the positive terminal connecting portion 20a is higher than the potential of the negative terminal connecting portion 20b when the connected power source information 800 is acquired, the MCU 1161 acquires connection state information indicating that there is a regular state of connection between the power source unit 111 and the connecting portion 20x. Meanwhile, when the potential difference between the positive terminal connecting portion 20a and the negative terminal connecting portion 20b is outside the predetermined range, or the potential of the positive terminal connecting portion 20a is lower than the potential of the negative terminal connecting portion 20b, the MCU 1161 acquires connection state information indicating that there is not a regular state of connection between the power source unit 111 and the connecting portion 20x. Short-circuit information, which is information indicating absence or presence of a short-circuit at the connecting portion 20x, can also be acquired in the same way, based on the potential difference between the positive terminal connecting portion 20a and the negative terminal connecting portion 20b, for example.

It should be noted that the methods described here for acquiring each item of information included in the connected power source information 800 are merely examples and are not limiting. That is to say, any known method may be used to acquire the various items of information included in the connected power source information 800. Furthermore, the connected power source information 800 described here is merely an example and is not limiting. That is to say, the connected power source information acquired by the MCU 1161 may omit any item of information from the connected power source information 800, or other information may be further added to the connected power source information 800.

### (Example of operating check)

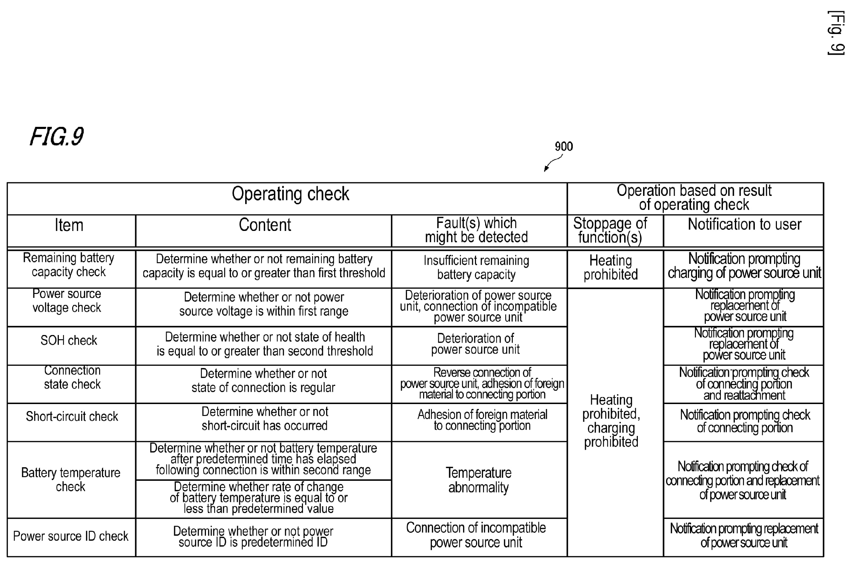

Fig. 9 is a diagram showing an example of the operating check implemented by the MCU 1161. As shown in the table 900 in fig. 9, the operating check performed by the MCU 1161 includes, for example: a remaining battery capacity check, a power source voltage check, an SOH check, a connection state check, a short-circuit check, a battery temperature check, and a power source ID check.

Here, the remaining battery capacity check is processing to check whether there is a certain amount of power remaining in the power source unit 111 after replacement. Specifically, in the remaining battery capacity check, the MCU 1161 determines whether or not the remaining battery capacity Cbat is equal to or greater than a predetermined first threshold, based on the remaining battery capacity information in the connected power source information 800. The MCU 1161 then detects a fault of insufficient remaining battery capacity Cbat in the power source unit 111 after replacement, based on a determination that the remaining battery capacity Cbat is not equal to or greater than the first threshold (i.e., is less than the first threshold).

Implementing an operating check that includes this remaining battery capacity check and controlling operation of the power supply unit 110 based on the result thereof makes it possible to inhibit a fault where power in the power source unit 111 runs out because the power supply unit 110 is operated as normal, despite there being insufficient remaining battery capacity Cbat in the power source unit 111 after replacement.

It should be noted that the first threshold used in the remaining battery capacity check can be appropriately established by the manufacturer of the power supply unit 110, but the first threshold is preferably set on the basis of the power required to generate an aerosol by means of the heating unit 121, which is the main operation of the power supply unit 110 (i.e., the inhalation device 100), for example. It is thus possible to inhibit situations where aerosol generation performed after replacement of the power source unit 111 is interrupted partway through because of insufficient remaining battery capacity Cbat in the power source unit 111 after replacement.

To describe this more specifically, the power supply unit 110 generates an aerosol by heating the aerosol source with the heater 121 based on a predetermined heating profile, for example. Here, the heating profile is information defining a time-series transition of the temperature of the heating unit 121. Then, when an aerosol is generated based on the heating profile, the MCU 1161 controls the temperature of the heating unit 121 on the basis of a deviation between a target temperature corresponding to the elapsed time from the start of heating by the heating unit 121, and the actual temperature of the heating unit 121 (which will also be referred to below as the "actual temperature"). At this time, the MCU 1161 controls the temperature of the heating unit 121 so that the time-series transition of the actual temperature is similar to the time-series transition of the target temperature defined in the heating profile. A value at which power capable of achieving aerosol generation based on such a heating profile can be ensured is adopted as the first threshold, for example.

Furthermore, the power source voltage check here is processing to check whether the power source voltage Vbat, which is the output voltage of the power source unit 111 after replacement, falls within a suitable range for the power supply unit 110. Specifically, in the power source voltage check, the MCU 1161 determines whether or not the power source voltage Vbat is within a predetermined first range, based on the power source voltage information in the connected power source information 800. The MCU 1161 then detects a fault of deterioration of the power source unit 111 after replacement, or connection of an incompatible power source unit 111 (in other words, the power source unit 111 after replacement is incompatible with the power supply unit 110), based on a determination that the power source voltage Vbat is not within the first range (i.e., is outside the first range).

For example, if the power source unit 111 after replacement has already deteriorated, the power source voltage Vbat thereof will be a value lower than a lower limit value of the first range. Furthermore, if the power source unit 111 after replacement is incompatible with the power supply unit 110, the power source voltage Vbat thereof will be a value higher than an upper limit value of the first range or will be a value lower than the lower limit value of the first range. It is therefore possible to determine a fault of deterioration of the power source unit 111 after replacement or connection of an incompatible power source unit 111, by determining whether or not the power source voltage Vbat of the power source unit 111 after replacement is within the first range. It should be noted that the first range used in the power source voltage check is preset by the manufacturer of the power supply unit 110 while taking account of hardware or software characteristics of power source units 111 that can be fitted to the power supply unit 110, or of the power supply unit 110 itself.

Implementing an operating check that includes this power source voltage check and controlling operation of the power supply unit 110 based on the result thereof makes it possible to inhibit a fault where the power supply unit 110 is operated as normal, despite the power source unit 111 after replacement being unsuitable for the power supply unit 110.

Furthermore, the SOH check here is processing to check whether the power source unit 111 after replacement is in a healthy condition (in other words whether deterioration is low). Specifically, in the SOH check, the MCU 1161 determines whether or not the SOH is equal to or greater than a second threshold, based on the SOH information in the connected power source information 800. The MCU 1161 then detects a fault of deterioration of the power source unit 111 after replacement, based on a determination that the SOH is not equal to or greater than the second threshold (i.e., is less than the second threshold).

For example, if the state of health of the power source unit 111 is represented by a range from 100 [%] to 0 [%], then the SOH has a higher value the better the health (in other words, the lower the deterioration) of the power source unit 111. The second threshold used in the SOH check may be appropriately established by the manufacturer of the power supply unit 110, but is preferably established while taking account of hardware characteristics of power source units 111 that can be fitted to the power supply unit 110, or of the power supply unit 110 itself. 70 [%], which is feasible for a power source unit 111 in a reasonable state of health, may be taken as an example of the second threshold used in the SOH check.

Implementing an operating check that includes this SOH check and controlling operation of the power supply unit 110 based on the result thereof makes it possible to inhibit a fault where the power supply unit 110 is operated as normal, despite the power source unit 111 after replacement already having deteriorated (in other words, having reduced performance).

Furthermore, the connection state check here is processing to check whether there is a regular state of connection between the power source unit 111 and the connecting portion 20x. Specifically, in the connection state check, the MCU 1161 determines whether or not there is a regular state of connection between the power source unit 111 and the connecting portion 20x, based on the connection state information in the connected power source information 800. The MCU 1161 then detects a fault of reverse connection of the power source unit 111, or adhesion of foreign material such as dust to the connecting portion 20x, based on a determination that there is not a regular state of connection between the power source unit 111 and the connecting portion 20x. It should be noted that a reverse connection of the power source unit 111 is, for example, a state where the negative terminal 111d of the power source unit 111 is connected to the positive terminal connecting portion 20a of the power supply unit 110, and the positive terminal 111c of the power source unit 111 is connected to the negative terminal 111d of the power supply unit 110.

Implementing an operating check that includes this connection state check and controlling operation of the power supply unit 110 based on the result thereof makes it possible to inhibit a fault where the power supply unit 110 is operated as normal, despite the power source unit 111 not being properly connected.

Furthermore, the short-circuit check here is processing to check that a short-circuit has not occurred at the connecting portion 20x connected to the power source unit 111 after replacement. Specifically, in the short-circuit check, the MCU 1161 determines whether or not a short-circuit has occurred at the connecting portion 20x, based on the short-circuit information in the connected power source information 800. The MCU 1161 then detects a fault of a short-circuit at the connecting portion 20x, based on a determination that a short-circuit has occurred. It should be noted that a short-circuit at the connecting portion 20x may occur due to foreign material such as dust having adhered to the connecting portion 20x, for example.

Implementing an operating check that includes this short-circuit check and controlling operation of the power supply unit 110 based on the result thereof makes it possible to inhibit a fault where the power supply unit 110 is operated as normal, despite a short-circuit having occurred in the connecting portion 20x connected to the power source unit 111 after replacement.

Furthermore, the battery temperature check here is processing to check whether the power source unit 111 after replacement is in a regular temperature state. In the battery temperature check of this embodiment, the MCU 1161 checks whether the battery temperature Tbat of the power source unit 111 after replacement is regular, and checks whether a temperature increase rate of the power source unit 111 after replacement is regular. The temperature increase rate of the power source unit 111 here is an amount of increase in the temperature of the power source unit 111 per unit time.

Specifically, in the check of the battery temperature Tbat, the MCU 1161 determines whether or not the battery temperature Tbat is within a predetermined second range, based on the battery temperature information in the connected power source information 800. The MCU 1161 then detects a fault of a temperature abnormality in the power source unit 111 after replacement, based on a determination that the battery temperature Tbat is not within the second range (i.e., is outside the second range).

It should be noted that a temperature abnormality where the battery temperature Tbat is outside the second range may occur, for example, when the power source unit 111 after replacement is incompatible with the power supply unit 110, or when foreign material such as dust has become trapped between the temperature terminal connecting portion 20c of the power supply unit 110 and the temperature terminal 111e of the power source unit 111. Furthermore, the second range used in the check of the battery temperature Tbat is preset by the manufacturer of the power supply unit 110 while taking account of hardware characteristics of power source units 111 that can be fitted to the power supply unit 110, or of the power supply unit 110 itself. An example of the second range used in the check of the battery temperature Tbat may be a range from 0 [°C] to 60 [°C].

Incidentally, it is also conceivable that even if the power source unit 111 after replacement is incompatible with the power supply unit 110, a certain amount of time will be needed before the battery temperature Tbat increases to a certain extent.

In the check of the battery temperature Tbat, the MCU 1161 may therefore acquire the battery temperature information indicating the battery temperature Tbat during a predetermined period after replacement of the power source unit 111, and may determine whether or not the battery temperature Tbat during that predetermined period is within the second range. More specifically, the MCU 1161 may determine whether the battery temperature Tbat during a period from when replacement of the power source unit 111 was detected until 5 [s] have elapsed falls within the second range. A temperature abnormality fault in the power source unit 111 after replacement, in other words a fault of connection of an incompatible power source unit 111 or a defective connection of the connecting portion 20x, can thus be detected with greater accuracy.

Furthermore, in the check of the temperature increase rate, the MCU 1161 determines whether or not the temperature increase rate of the power source unit 111 during a predetermined period after replacement of the power source unit 111 is equal to or less than a third threshold, based on the battery temperature information in the connected power source information 800. The MCU 1161 then detects a fault of a temperature abnormality in the power source unit 111 after replacement, based on a determination that the temperature increase rate of the power source unit 111 is not equal to or less than the third threshold (i.e., is greater than the third threshold).

A temperature abnormality where the temperature increase rate of the power source unit 111 is greater than the third threshold can also occur, for example, when the power source unit 111 after replacement is incompatible with the power supply unit 110. Furthermore, the third threshold used in the check of the temperature increase rate is preset by the manufacturer of the power supply unit 110 while taking account of characteristics of power source units 111 that can be fitted to the power supply unit 110, or of the power supply unit 110 itself.

Implementing an operating check that includes a battery temperature check such as above and controlling operation of the power supply unit 110 based on the result thereof makes it possible to inhibit a fault where the power supply unit 110 is operated as normal, despite the power source unit 111 after replacement being incompatible with the power supply unit 110, or the power source unit 111 not being properly connected.

Furthermore, the power source ID check here is processing to check whether the power source unit 111 after replacement is compatible with the power supply unit 110, based on the power source ID of the power source unit 111 after replacement. Specifically, in the power source ID check, the MCU 1161 determines whether or not the power source ID of the power source unit 111 after replacement is a predetermined ID, based on the power source ID information in the connected power source information 800. The MCU 1161 then detects a fault of connection of an incompatible power source unit 111, based on a determination that the power source ID of the power source unit 111 after replacement is not a predetermined ID.

As an example, a "genuine" power source unit 111, which is provided to the user by the manufacturer of the power supply unit 110, is assigned a power source ID including predetermined character string. In this case, in the power source ID check, the MCU 1161 determines whether or not the power source ID of the power source unit 111 after replacement includes the predetermined character string. If the MCU 1161 determines that the predetermined character string is not included, it is then determined that the power source ID of the power source unit 111 after replacement is not the predetermined ID. This makes it possible to detect a fault of connection of an incompatible power source unit 111 when there has been replacement with a power source unit 111 manufactured by a third party other than the manufacturer of the power supply unit 110, in other words, replacement with a "non-genuine" power source unit 111 for which safety is not guaranteed by the manufacturer of the power supply unit 110.

Furthermore, in the power source ID check, the MCU 1161 may send power source ID information via the communication unit 115 to a server device (e.g., a server device SV which will be described later) managed by the manufacturer of the power supply unit 110, for example. In this case, the server device having received the power source ID information performs authentication as to whether the power source ID of the power source unit 111 after replacement is the predetermined ID, and returns the result of the authentication to the power supply unit 110. The MCU 1161 may then determine whether or not the power source ID of the power source unit 111 after replacement is the predetermined ID, based on the authentication result received from the server device.

Furthermore, if any fault is detected by the operating check described above, as shown in Table 900, the MCU 1161 prohibits heating by the heating unit 121 (in other words, electrical supply to the heating unit 121), for example. That is to say, in this case the MCU 1161 ensures that heating by the heating unit 121 is not performed, even if there is a heating request from the user. This makes it possible to inhibit a fault where heating by the heating unit 121 is performed, despite there being some kind of fault relating to the power source unit 111 or the connecting portion 20x after replacement of the power source unit 111.

In addition, if the fault detected by the operating check is anything other than insufficient remaining battery capacity Cbat, the MCU 1161 also prohibits charging of the power source unit 111, for example. That is to say, in this case the MCU 1161 ensures that the power source unit 111 is not charged, even if there is a charging request from the user (e.g., even if the power supply unit 110 is connected to an external device, for example). This makes it possible to inhibit a fault where the power source unit 111 is charged, despite there being some kind of fault relating to the power source unit 111 or the connecting portion 20x after replacement of the power source unit 111.

Furthermore, if any fault is detected by the operating check as shown in Table 900, the MCU 1161 notifies the user, via the notification unit 113, of a recommendation in response to the fault detected, for example.

Specifically, if a fault of insufficient remaining battery capacity Cbat has been detected by the remaining battery capacity check, the MCU 1161 provides a notification prompting charging of the power source unit 111, for example, as the recommendation. If a fault of deterioration of the power source unit 111 or connection of an incompatible power source unit 111 has been detected by the power source voltage check, the MCU 1161 provides a notification prompting replacement of the power source unit 111, for example, as the recommendation. If a fault of deterioration of the power source unit 111 has been detected by the SOH check, the MCU 1161 provides a notification prompting replacement of the power source unit 111, for example, as the recommendation.

Furthermore, if a fault of reverse connection of the power source unit 111 or adhesion of foreign material to the connecting portion 20x has been detected by the connection state check, the MCU 1161 provides a notification prompting checking of the connecting portion 20x and reattachment of the power source unit 111, for example, as the recommendation. If a fault of adhesion of foreign material to the connecting portion 20x has been detected by the short-circuit check, the MCU 1161 provides a notification prompting checking of the connecting portion 20x, for example, as the recommendation.

Furthermore, if a fault of connection of an incompatible power source unit 111 or adhesion of foreign material to the connecting portion 20x has been detected by the battery temperature check, the MCU 1161 provides a notification prompting checking of the connecting portion 20x and replacement of the power source unit 111, for example, as the recommendation. If a fault of connection of an incompatible power source unit 111 has been detected by the power source ID check, the MCU 1161 provides a notification prompting replacement of the power source unit 111, for example, as the recommendation.

Furthermore, it is also feasible that multiple faults will be detected by the operating check. In such a case, the MCU 1161 should notify a recommendation in response to each of the faults detected, for example.

Furthermore, if no fault is detected by the operating check, the MCU 1161 does not prohibit heating by the heating unit 121 or charging of the power source unit 111, for example. Accordingly, in this case the MCU 1161 may allow heating by the heating unit 121 in response to a user heating request, and may allow charging of the power source unit 111 in response to the power supply unit 110 being connected to an external device.

It should be noted that the operating check described here, and operation of the power supply unit 110 based on results of the operating check are merely examples, and are not limiting. For example, any of the checks described above may be omitted from the operating check implemented by the MCU 1161, or other checks may be added thereto. Furthermore, other operations of the power supply unit 110 based on the results of the operating check may also be performed instead of those described here, and other operations may also be included in addition to those described here.

Furthermore, the timing at which the MCU 1161 implements the operating check may be when the user has performed a predetermined action (e.g., a heating request or a charging request) for the first time after replacement of the power source unit 111, for example, but this is not limiting. For example, the MCU 1161 may implement the operating check each time there has been a predetermined action after replacement of the power source unit 111, until the predetermined action has been performed a predetermined number of times (e.g., five times). Safety of the power supply unit 110 can thus be further improved by implementing the operating check multiple times at different timings after replacement of the power source unit 111.

### (Resetting of cycle count value and SOH)

In this embodiment, the remaining capacity meter IC 1162 increments the cycle count of the power source unit 111 and stores cycle count information indicating the count value thereof (cycle count value). The remaining capacity meter IC 1162 also further stores SOH information indicating the SOH of the power source unit 111. These items of information stored by the remaining capacity meter IC 1162 can be used to derive the remaining battery capacity Cbat, for example. Furthermore, it is also feasible for the MCU 1161 to control operation of the power supply unit 110 on the basis of the cycle count value and/or the SOH, by suitable reference to the information thereof stored by the remaining capacity meter IC 1162.

As an example, it is feasible for the MCU 1161 to determine the lifespan of the power source unit 111 on the basis of the cycle count value. In this case, the MCU 1161 determines that the power source unit 111 has reached the end of its lifespan, based on the cycle count value having reached a predetermined value (e.g., 1000 times). The MCU 1161 having determined that the power source unit 111 has reached the end of its lifespan then provides a notification via the notification unit 113 prompting the user to replace the power source unit 111, for example.

As another example, it is feasible for the MCU 1161 to control heating by the heating unit 121 based on the SOH. In this case, if there is a heating request from the user when heating by the heating unit 121 is not prohibited (that is, when no fault has been detected by the operating check), the MCU 1161 determines whether or not the remaining battery capacity Cbat at that time is equal to or greater than a predetermined heating permission threshold. The MCU 1161 then allows heating by the heating unit 121 based on a determination that the remaining battery capacity Cbat is equal to or greater than the heating permission threshold. This allows heating by the heating unit 121 to be performed only when the remaining battery capacity Cbat is equal to or greater than the heating permission threshold, in other words, only when the remaining battery capacity Cbat is sufficient for the heating unit 121 to perform heating.

The heating permission threshold is designed to be a greater value as the SOH deteriorates (e.g., approaches 0 [%]), for example. This is because the power source voltage Vbat decreases as the SOH deteriorates, so it is no longer possible to maintain power supply to the heating unit 121 (in other words the power required to generate an aerosol) unless the output current from the power source unit 111 is increased.

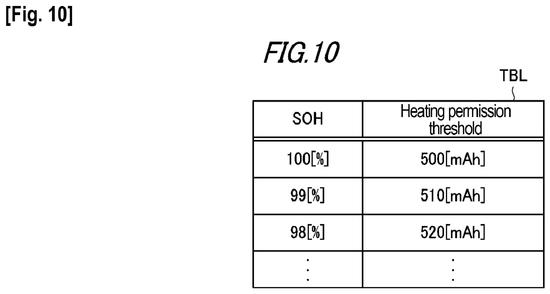

Fig. 10 is a diagram showing an example of a heating permission threshold table TBL defining heating permission thresholds. The heating permission threshold table TBL shown in fig. 10 shows a defined heating permission threshold for each SOH. Specifically, the heating permission threshold table TBL shows that, as the SOH deteriorates, the heating permission threshold corresponding to that SOH also increases, as indicated by a heating permission threshold of 500 [mAh] when the SOH is 100 [%], a heating permission threshold of 510 [mAh] when the SOH is 99 [%], and a heating permission threshold of 520 [mAh] when the SOH is 98 [%].

For example, when there has been a user heating request while heating by the heating unit 121 is not prohibited, the MCU 1161 refers to the SOH stored by the remaining capacity meter IC 1162 and the heating permission threshold table TBL stored in the memory unit 114, etc., and acquires the heating permission threshold corresponding to the SOH at that time (e.g., 520 [mAh] when the SOH is 98 [%]).

The MCU 1161 then determines whether or not the remaining battery capacity Cbat is equal to or greater than the heating permission threshold by comparing the acquired heating permission threshold with the remaining battery capacity Cbat at that time, and allows heating by the heating unit 121 based on a determination that the remaining battery capacity Cbat is equal to or greater than the heating permission threshold. Meanwhile, when it has been determined that the remaining battery capacity Cbat is not equal to or greater than the heating permission threshold (i.e., is less than the heating permission threshold), the MCU 1161 ensures that the heating unit 121 is not allowed to perform heating. This allows heating by the heating unit 121 to be performed only when the remaining battery capacity Cbat is sufficient to generate an aerosol.

The MCU 1161 and/or the remaining capacity meter IC 1162 thus refers to the cycle count value and/or the SOH to implement processing relating to control of the power supply unit 110, thereby making it possible for the power supply unit 110 to perform operations that take account of the cycle count value and/or the SOH, offering better user convenience.

When such a configuration is adopted, however, the power supply unit 110 might still be controlled on the basis of the cycle count value and/or the SOH of the old power source unit 111 after replacement of the power source unit 111, unless the cycle count value and/or the SOH are/is reset along with replacement of the power source unit 111. If the power supply unit 110 were still controlled on the basis of the cycle count value and/or the SOH of the old power source unit 111 after replacement of the power source unit 111, then it would no longer be possible to suitably derive the remaining battery capacity Cbat, determine the lifespan of the power source unit 111, or acquire the heating permission threshold, etc., which could lead to a drop in user convenience.

When the power source unit 111 which was connected to the connecting portion 20x has been replaced, for example, the MCU 1161 (i.e., the control unit 116) therefore performs reset processing to reset the cycle count value and/or the SOH stored by the remaining capacity meter IC 1162 to a predetermined value. By performing reset processing such as this, it is possible to inhibit a drop in user convenience by preventing the power supply unit 110 from being controlled on the basis of the cycle count value and/or the SOH of the old power source unit 111 after replacement of the power source unit 111.

In this embodiment, the remaining capacity meter IC 1162 stores each of the cycle count value and the SOH, and the MCU 1161 therefore resets both the cycle count value and the SOH stored by the remaining capacity meter IC 1162 to predetermined values in the reset processing. The cycle count value and the SOH stored by the remaining capacity meter IC 1162 can be reset by sending a reset request instructing resetting thereof to the remaining capacity meter IC 1162.

Furthermore, in this embodiment, the MCU 1161 performs the reset processing when the power source unit 111 is connected to the connecting portion 20x and no fault has been detected by the abovementioned operating check. As a result, if the user switches back to the old power source unit 111 because a fault was detected by the operating check, the power supply unit 110 can continue to be controlled on the basis of the cycle count value and the SOH of the old power source unit 111.

Furthermore, the MCU 1161 may be configured to perform the reset processing when no fault has been detected by the operating check and there has been a predetermined user action. The predetermined action here may be, for example, an action to instruct implementation of the reset processing, and pressing of an operation button (e.g., an operation button on the operating portion 15) provided on the inhalation device 100 may be cited as such an example. As another example, the predetermined action may be an action to input information instructing implementation of the reset processing to the power supply unit 110, via another device such as the user's smartphone. By awaiting a predetermined user action before performing the reset processing, it is thus possible to prevent the reset processing from being performed contrary to the user's intention.

### (Example of reset processing)

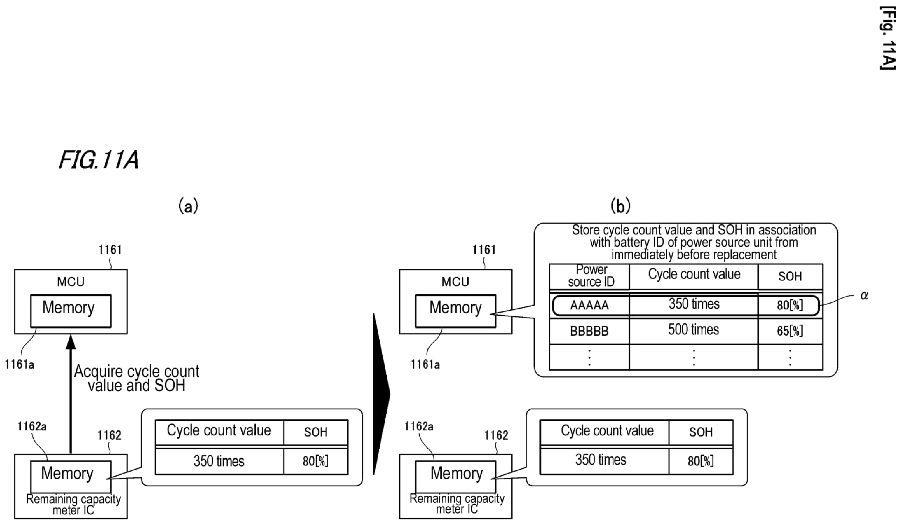

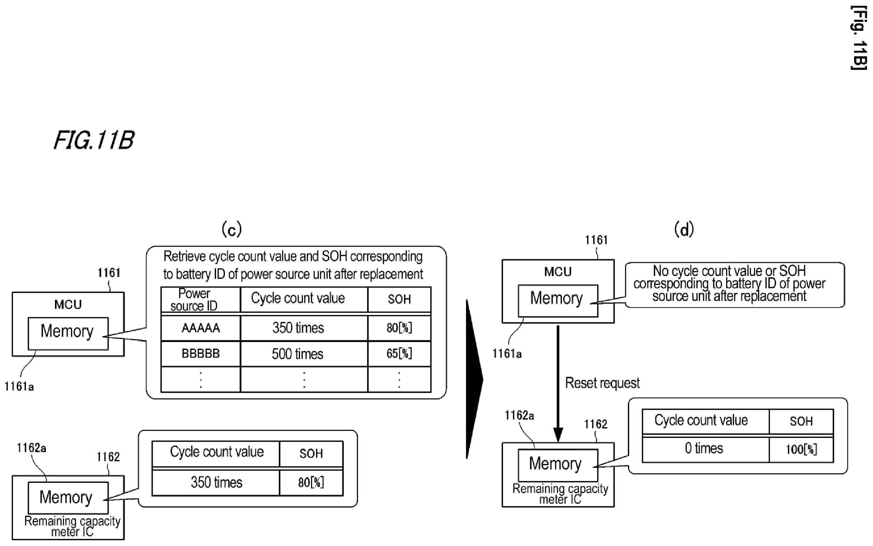

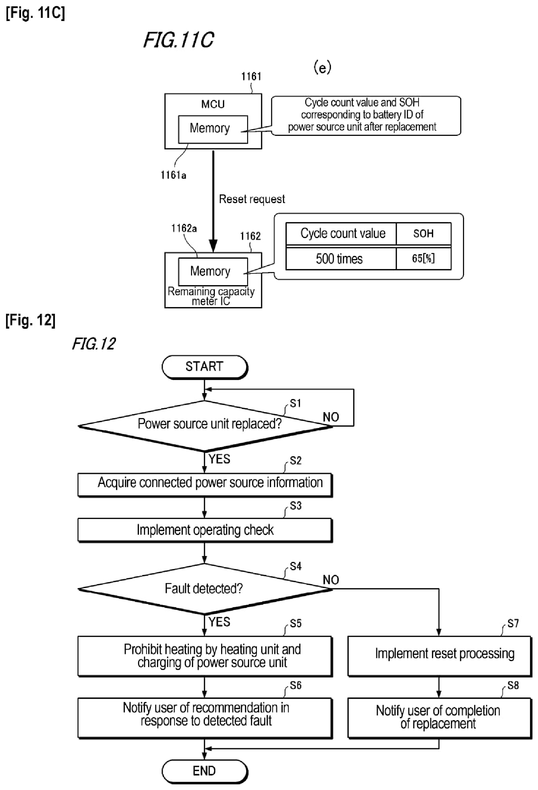

An example of the reset processing performed by the MCU 1161 will be described here. Fig. 11A is a diagram (1 of 3) showing an example of the reset processing performed by the MCU 1161. Fig. 11B is a diagram (2 of 3) showing an example of the reset processing performed by the MCU 1161. Fig. 11C is a diagram (3 of 3) showing an example of the reset processing performed by the MCU 1161.

In the reset processing, the MCU 1161 first of all acquires the cycle count value and SOH from immediately before resetting from the memory 1162a of the remaining capacity meter IC 1162, by referring to the memory 1162a immediately before resetting, as shown in (a) of fig. 11A. By this means, cycle count information indicating that the cycle count value is 350 times and SOH information indicating that the SOH is 80 [%] is acquired in the example shown in (a) of fig. 11A.

Next, as shown in (b) of fig. 11A, the MCU 1161 causes a memory 1161a of the MCU 1161, different from the memory 1162a of the remaining capacity meter IC 1162, to store the acquired cycle count information and SOH information, in other words information indicating the cycle count value and SOH from immediately before resetting, in association with the power source ID of the old power source unit 111 which was connected to the connecting portion 20x immediately before the power source unit 111 was replaced.

In the example shown in (b) of fig. 11A, the power source ID of the old power source unit 111 which was connected to the connecting portion 20x immediately before the power source unit 111 was replaced was "AAAAA", so the MCU 1161 causes the memory 1161a to store the power source ID "AAAAA" in association with the cycle count value "350 times" and the SOH "80 [%]" from immediately before resetting (see the part enclosed by the line with the reference sign α).

Next, as shown in (c) of fig. 11B, the MCU 1161 retrieves from the memory 1161a the cycle count value and SOH corresponding to the power source ID of the power source unit 111 after replacement, based on the power source ID information in the connected power source information 800, for example. For example, if the power source ID of the power source unit 111 after replacement is "BBBBB", for example, then the MCU 1161 retrieves from the memory 1161a the cycle count value and SOH corresponding to the power source ID "BBBBB".

Let us assume that a cycle count value and an SOH corresponding to the power source ID of the power source unit 111 after replacement were not retrieved from the memory 1161a as a result of the search above. For example, if the power source unit 111 after replacement is being attached to the power supply unit 110 for the first time, then no cycle count value or SOH corresponding to the power source ID of the power source unit 111 after replacement will be retrieved from the memory 1161a.

In such a case, as shown in (d) of fig. 11B, the MCU 1161 sends to the remaining capacity meter IC 1162 a reset request requesting a reset to predetermined initial values, whereby the cycle count value and the SOH stored in the memory 1162a of the remaining capacity meter IC 1162 are reset to predetermined initial values. By this means, in the example shown in (d) in fig. 11B, the cycle count value stored in the memory 1162a is reset to the initial value "0 times", and the SOH is reset to the initial value "100 [%]".

Let us assume on the other hand that a cycle count value and an SOH corresponding to the power source ID of the power source unit 111 after replacement were retrieved as a result of the search above. For example, if a power source unit 111 which has previously been attached to the power supply unit 110 is once again attached to the power supply unit 110, then a cycle count value and an SOH corresponding to the power source ID of the power source unit 111 after replacement will thus be retrieved. As an example, the power source ID of the power source unit 111 after replacement here was "BBBBB", so the cycle count value "500 times" and the SOH "65 [%]" corresponding to the power source ID "BBBBB" were retrieved.

In such a case, as shown in (e) in fig. 11C, the MCU 1161 sends to the remaining capacity meter IC 1162 a reset request requesting a reset to the retrieved cycle count value and SOH, that is, a reset to the cycle count value and SOH corresponding to the power source ID of the power source unit 111 after replacement. By this means, in the example shown in (e) in fig. 11C, the cycle count value stored in the memory 1162a is reset to "500 times", and the SOH is reset to "65 [%]".

As described above, when the cycle count value and the SOH stored by the remaining capacity meter IC 1162 (more specifically the memory 1162a) are reset to predetermined values, the MCU 1161 causes the memory 1161a of the MCU 1161 to store the information indicating the cycle count value and the SOH from immediately before resetting to those predetermined values. By this means, even if the cycle count value and the SOH stored by the remaining capacity meter IC 1162 are reset, the values can later be restored to the cycle count value and the SOH from before the reset by referring to the memory 1161a, as required.

Furthermore, the MCU 1161 causes the memory 1161a to store the information indicating the cycle count value and the SOH from immediately before resetting in association with the power source ID of the old power source unit 111 which was connected to the connecting portion 20x immediately before the power source unit 111 was replaced. This enables the memory 1161a to store a cycle count value and an SOH corresponding to each power source unit 111 in a distinguishable state.

When the power source unit 111 has been replaced, the MCU 1161 then acquires the power source ID of the power source unit 111 after replacement and retrieves from the memory 1161a the cycle count value and the SOH corresponding to the power source ID of the power source unit 111 after replacement, and, if a cycle count value and SOH corresponding to the power source ID of the power source unit 111 after replacement were retrieved, the MCU 1161 resets the cycle count value and the SOH stored by the remaining capacity meter IC 1162, using the retrieved cycle count value and SOH as predetermined values. This makes it possible to restore the cycle count value and the SOH to the cycle count value and the SOH corresponding to the old power source unit 111 by referring to the memory 1161a, if the old power source unit 111 is once again attached to the power supply unit 110 for any reason such as a fault occurring in the power source unit 111 after replacement, for example. The power supply unit 110 can therefore still be suitably operated on the basis of a suitable cycle count value and/or SOH after an old power source unit 111 has once again been attached.

Meanwhile, if a cycle count value and SOH corresponding to the power source ID of the power source unit 111 after replacement were not retrieved, the MCU 1161 resets the cycle count value and the SOH stored by the remaining capacity meter IC 1162, using predetermined initial values as predetermined values. This enables the power supply unit 110 to still be suitably operated on the basis of a suitable cycle count value and/or SOH when the power source unit 111 after replacement is attached to the power supply unit 110 for the first time, for example.

### (Example of control flow performed by MCU)

Fig. 12 is a flowchart showing an example of a control flow performed by the MCU 1161. As shown in fig. 12, the MCU 1161 first of all determines whether or not the power source unit 111 which was connected to the connecting portion 20x has been replaced, in other words, whether or not the power source unit 111 attached to the power supply unit 110 has been replaced (step S1). If it is determined that the power source unit 111 has not been replaced (step S1: NO), the MCU 1161 repeats the processing of step S1 until there is a determination that the power source unit 111 has been replaced.

If it is determined that the power source unit 111 has been replaced (step S1: YES), the MCU 1161 acquires connected power source information (e.g., the connected power source information 800 shown in fig. 8) relating to the power source unit 111 connected to the connecting portion 20x (step S2). The MCU 1161 then implements the operating check (step S3) based on the connected power source information acquired by the processing of step S2.

Next, the MCU 1161 determines whether or not a fault has been detected (step S4) by the operating check of step S3. If a fault is detected (step S4: YES), the MCU 1161 prohibits heating by the heating unit 121 and charging of the power source unit 111 (step S5). The MCU 1161 then notifies the user, via the notification unit 113, of a recommendation in response to the fault detected (step S6), and terminates the series of processes.

Furthermore, if no fault is detected (step S4: NO), the MCU 1161 implements the reset processing (step S7). The MCU 1161 then notifies the user, via the notification unit 113, that replacement of the power source unit 111 is complete (step S8), and terminates the series of processes.

As described above, by virtue of the power supply unit 110 according to this embodiment, when a power source unit 111 capable of storing power and configured to be removable from the power supply unit 110 has been replaced, it is possible to detect faults relating to the power source unit 111 after replacement and/or faults relating to the connecting portion 20x of the power supply unit 110 connected to the power source unit 111 after replacement, enabling operation based on the detection result. It is therefore possible to inhibit a fault where the power supply unit 110 is operated as normal, despite there being some kind of fault relating to the power source unit 111 or the connecting portion 20x after replacement of the power source unit 111. Better safety of the power supply unit 110 and/or better user convenience can therefore be envisaged.

Even if the power source unit 111 after replacement is incompatible with the power supply unit 110, it is also conceivable for the power source unit 111 after replacement to be usable with the power supply unit 110 by updating firmware of the power supply unit 110.

When it has been determined by the operating check that the power source unit 111 after replacement is incompatible with the power supply unit 110, the control unit 116 (e.g., the MCU 1161) may be configured to acquire, from an external device, firmware of the power supply unit 110 corresponding to the power source unit 111 after replacement by sending power source ID information indicating the power source ID of the power source unit 111 after replacement to the external device via the communication unit 115.

### (Information processing system for updating firmware of power supply unit 110)

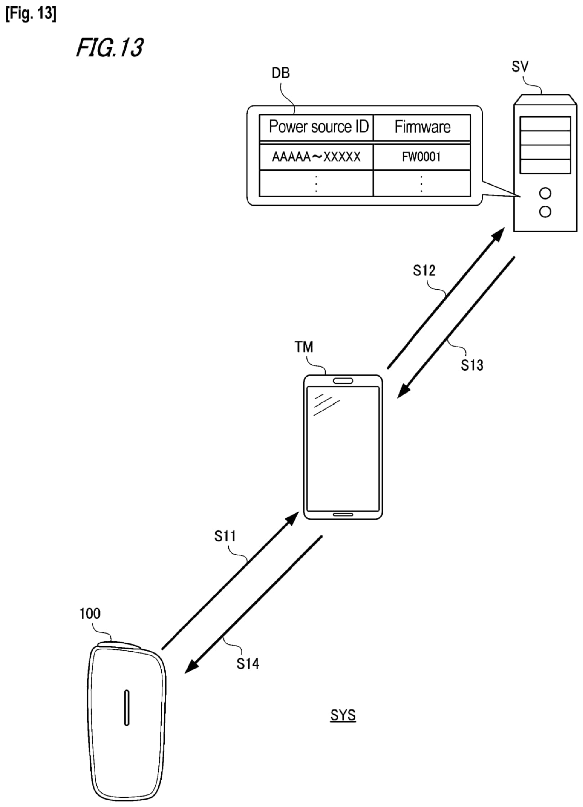

Fig. 13 is a diagram showing an example of an information processing system for updating firmware of the power supply unit 110. An information processing system SYS shown in fig. 13 comprises the abovementioned inhalation device 100, a terminal device TM, and a server device SV.

The inhalation device 100 (more specifically the power supply unit 110) and the terminal device TM are provided in the information processing system SYS in such a way as to be capable of communicating with each other. Communication between the inhalation device 100 and the terminal device TM may employ, for example, Wi-Fi, Bluetooth, BLE, NFC or LPWA, etc. Furthermore, the inhalation device 100 and the terminal device TM may have a wired connection.

Furthermore, the terminal device TM and the server device SV in the information processing system SYS are provided in such a way as to be capable of communicating with each other via a predetermined network such as a mobile communication network, the Internet, or a WAN (Wide Area Network).

The terminal device TM is a computer used by the user of the inhalation device 100. A smartphone, a tablet terminal, a PC, or a wearable terminal (e.g., a smartwatch), or the like, may be used as the terminal device TM. The terminal device TM described below is assumed to be a smartphone.

The server device SV is managed, for example, by the manufacturer of the inhalation device 100 (i.e., the power supply unit 110), and is a computer which distributes firmware of the power supply unit 110 via the network. The server device SV may be a virtual server (cloud server) implemented in a cloud computing service, or may be a physical server implemented as a single device.

As shown in fig. 13, the server device SV has a firmware database DB in which the power source ID is associated with firmware enabling use of the power source unit 111 identified by this power source ID, for example. In the firmware database DB shown in fig. 13, firmware "FW0001" is associated with the power source ID "AAAAA".

In the information processing system SYS, when it has been determined by the operating check that the power source unit 111 after replacement is incompatible with the power supply unit 110 (e.g., when it has been determined that the power source ID of the power source unit 111 after replacement is not a predetermined ID), the control unit 116 of the inhalation device 100 sends a firmware acquisition request including power source ID information indicating the power source ID of the power source unit 111 after replacement to the terminal device TM via the communication unit 115 (see the arrow with the reference sign S11 in fig. 13).

Furthermore, the control unit 116 may await a predetermined user action before sending the firmware acquisition request to the terminal device TM. For example, when there is a predetermined user action on the terminal device TM (e.g., tapping of a "start FW update" icon provided on a display screen of the terminal device TM), the terminal device TM provides a notification to that effect to the control unit 116 of the inhalation device 100. The control unit 116 may then be triggered to send the firmware acquisition request to the terminal device TM by receiving this notification.

The terminal device TM having accepted the firmware acquisition request from the inhalation device 100 then sends a firmware distribution request including power source ID information indicating the power source ID of the power source unit 111 after replacement to the server device SV via the network (see the arrow with the reference sign S12 in fig. 13).

The server device SV having accepted the firmware distribution request from the terminal device TM refers to the power source ID information included in the distribution request and retrieves firmware corresponding to the power source ID therein from the firmware database DB. When the corresponding firmware has been retrieved, the server device SV then sends the retrieved firmware to the terminal device TM from which the firmware distribution request originated (see the arrow with the reference sign S13 in fig. 13).

On receiving the firmware from the server device SV, the terminal device TM stores this firmware in its own memory (not depicted), for instance. The terminal device TM then sends the firmware received from the server device SV to the inhalation device 100 from which the firmware acquisition request originated (see the arrow with the reference sign S14 in fig. 13).

The control unit 116 of the inhalation device 100 which received the firmware from the terminal device TM updates the firmware in the inhalation device 100 (more specifically, the power supply unit 110) to the firmware received from the terminal device TM. Specifically, by means of the firmware update, the control unit 116 modifies parameters used for acquiring information relating to the power source unit 111, and parameters used for controlling discharge from the power source unit 111 or charging of the power source unit 111, etc., for example. This enables the power source unit 111 after replacement to be used in the power supply unit 110.

The parameters to be modified by the firmware update may include the abovementioned heating permission threshold, for example. That is to say, the control unit 116 may rewrite the heating permission threshold table TBL by means of the firmware update. Furthermore, the parameters to be modified by the firmware update may also include, for example, a threshold parameter used for determining whether or not the power source unit 111 is in a state of discharge (a state of deep discharge), a parameter representing the open circuit voltage (OCV) used by the remaining capacity meter IC 1162 to derive the remaining battery capacity Cbat, and a threshold parameter used for determining whether the protection IC 1114 has stopped discharge or charging of the power source unit 111, etc.

Furthermore, when it has been determined by the operating check that the power source unit 111 after replacement is incompatible with the power supply unit 110, a portion of operations in the inhalation device 100 may be stopped, including heating by the heating unit 121 and charging of the power source unit 111. The control unit 116 lifts the prohibition on the portion of operations when the firmware update is complete, for example. By this means, the power supply unit 110 (i.e., the inhalation device 100) can be operated as normal when the power source unit 111 after replacement has been made compatible with the power supply unit 110 by the firmware update, offering better user convenience.

Furthermore, the control unit 116 may, for example, notify the user via the notification unit 113 that a firmware update is in progress while the firmware is updating, and may notify the user that the firmware update is complete when updating of the firmware has ended. The user can thus be made aware of the operating state of the inhalation device 100 (in other words the power supply unit 110) during the firmware update, offering better user convenience.

Furthermore, when it has been determined by the operating check that the power source unit 111 after replacement is incompatible with the power supply unit 110, the control unit 116 may, for example, notify the user via the notification unit 113 that the firmware will be updated in order to allow use of the power source unit 111 after replacement. When there has been a predetermined user action after this notification, the control unit 116 may then send the abovementioned firmware acquisition request to the terminal device TM to update the firmware of the power supply unit 110.

Embodiments of the power supply unit for an aerosol generating device according to the present disclosure have been described above, but it goes without saying that the present invention is not limited to such embodiments. It is obvious that a person skilled in the art will be able to conceive of a number of variant examples or modified examples within the scope disclosed in the claims, and any such variant examples or modified examples are naturally understood to fall within the technical scope of the present disclosure. Furthermore, the components in the embodiments described above may be combined in any way within a scope that does not depart from the essential point of the invention.

Furthermore, the control method described in the embodiments above can be realized by executing a pre-prepared program on a computer. This program is stored on a computer-readable storage medium and is run by being read out from the storage medium. The program may also be provided in a form stored in a non-volatile (non-transitory) storage medium such as a flash memory, or may be provided over a network such as the Internet. Furthermore, the computer that executes this program was the control unit 116 in this embodiment, but is not limited thereto. For example, the computer executing the program may be, for example, included in the inhalation device 100, but this is not limiting, and the computer may also be included in another device capable of communicating with the inhalation device 100.

The present specification, etc. sets forth at least the following features. Corresponding components, etc. in the embodiments described above are shown by way of example in parentheses, but there is no limitation to such components.

(1) A power supply unit (power supply unit 110, 110A, 110B) for an aerosol-generating device (inhalation device 100, 100A, 100B) which generates an aerosol from an aerosol source, the power supply unit comprising:
   a connecting portion (connecting portion 20x, positive terminal connecting portion 20a, negative terminal connecting portion 20b, temperature terminal connecting portion 20c, positive terminal 90a, negative terminal 90b, temperature terminal 90c) to which is connected a power source unit (power source unit 111, 111A, 111B) capable of storing power and configured to be removable from the power supply unit; and
   a memory unit (remaining capacity meter IC 1162, memory 1162a) for storing information indicating at least a cycle count value and/or state of health of the power source unit connected to the connecting portion; and
   a control unit (control unit 116, 116A, 116B, MCU 1161, remaining capacity meter IC 1162) for controlling operation of the power supply unit on the basis of the cycle count value and/or the state of health, by referring to the information stored in the memory unit,
   wherein
   when the power source unit which was connected to the connecting portion has been replaced, the control unit resets the cycle count value and/or the state of health stored by the memory unit to a predetermined value.

According to (1), when the power source unit which was connected to the connecting portion has been replaced, it is possible to prevent the power supply unit from being controlled on the basis of the cycle count value and/or the state of health of the old power source unit after replacement of the power source unit, by resetting the cycle count value and/or the state of health of the power source unit stored by the memory unit to a predetermined value. Operation of the power supply unit can therefore be suitably controlled on the basis of the cycle count value and/or the state of health of the power source unit also after the power source unit has been replaced, and a drop in user convenience can be inhibited.

(2) The power supply unit for an aerosol-generating device as disclosed in (1), wherein when the cycle count value and/or the state of health is reset to the predetermined value, the control unit causes another memory unit (MCU 1161, memory 1161a) different from the abovementioned memory unit to store information indicating a cycle count value and/or state of health from immediately before resetting to said predetermined value.

According to (2), even if the cycle count value and the state of health stored by the memory unit are reset, the values can later be restored to the cycle count value and the state of health from before the reset by referring to the other memory unit, as required.

(3) The power supply unit for an aerosol-generating device as disclosed in (2), wherein
the control unit
is configured to be capable of acquiring identification information of the power source unit connected to the connecting portion, and
causes the other memory unit to store the information indicating the cycle count value and/or the state of health from immediately before resetting to said predetermined value, in association with identification information of the old power source unit which was connected to the connecting portion immediately before the power source unit was replaced.

According to (3), a cycle count value and a state of health corresponding to each power source unit can be stored in the other memory unit in a distinguishable state.

(4) The power supply unit for an aerosol-generating device as disclosed in (3), wherein
when the power source unit which was connected to the connecting portion has been replaced, the control unit acquires identification information of the power source unit after replacement,
the control unit retrieves from the other memory unit a cycle count value and/or state of health corresponding to the identification information of the power source unit after replacement, and
when a cycle count value and/or state of health corresponding to the identification information of the power source unit after replacement was retrieved, the control unit uses said cycle count value and/or state of health as the predetermined value.

According to (4), it is possible to restore the cycle count value and the state of health to the cycle count value and the state of health corresponding to the old power source unit by referring to the other memory unit, if the old power source unit is once again attached to the power supply unit for any reason such as a fault occurring in the power source unit after replacement, for example. The power supply unit can therefore still be suitably operated on the basis of a suitable cycle count value and/or state of health after an old power source unit has once again been attached.

(5) The power supply unit for an aerosol-generating device as disclosed in (4), wherein when a cycle count value and/or state of health corresponding to the identification information of the power source unit after replacement was not retrieved, the control unit uses a predetermined initial value as the predetermined value.

According to (5), the power supply unit can still be suitably operated on the basis of a suitable cycle count value and/or state of health when the power source unit after replacement is attached to the power supply unit for the first time, for example.

(6) The power supply unit for an aerosol-generating device as disclosed in any of (1) to (5), wherein
when the power source unit which was connected to the connecting portion has been replaced, the control unit implements a predetermined operating check to detect faults relating to the power source unit after replacement, and
when no faults were detected by the operating check, the control unit resets the cycle count value and/or the state of health stored by the memory unit to the predetermined value.

According to (6), if the user switches back to the old power source unit because a fault was detected by the operating check, the power supply unit can continue to be controlled on the basis of the cycle count value and the state of health of the old power source unit.

(7) The power supply unit for an aerosol-generating device as disclosed in (6), wherein when no faults were detected by the operating check and there has been a predetermined user operation, the control unit resets the cycle count value and/or the state of health stored by the memory unit to the predetermined value.

According to (7), by awaiting a predetermined user action before resetting the cycle count value and/or the state of health, it is possible to prevent the reset from being performed contrary to the user's intention.

### REFERENCE SIGNS LIST

100, 100A, 100B Inhalation device (aerosol-generating device)
110, 110A, 110B Power supply unit
111, 111A, 111B Power source unit
116, 116A, 116B Control unit
1161 MCU (control unit)
1161a Memory (other memory unit)
1162 Remaining capacity meter IC (control unit, memory unit)
1162a Memory (memory unit)
20x Connecting portion
20a Positive terminal connecting portion (connecting portion)
20b Negative terminal connecting portion (connecting portion)
20c Temperature terminal connecting portion (connecting portion)
90a Positive terminal (connecting portion)
90b Negative terminal (connecting portion)
90c Temperature terminal (connecting portion)

## Claims

1. A power supply unit for an aerosol-generating device which generates an aerosol from an aerosol source, the power supply unit comprising:
a connecting portion to which is connected a power source unit capable of storing power and configured to be removable from the power supply unit;
a memory unit for storing information indicating at least a cycle count value and/or state of health of the power source unit connected to the connecting portion; and
a control unit for controlling operation of the power supply unit on the basis of the cycle count value and/or the state of health, by referring to the information stored in the memory unit,
wherein
when the power source unit which was connected to the connecting portion has been replaced, the control unit resets the cycle count value and/or the state of health stored by the memory unit to a predetermined value.

2. The power supply unit for an aerosol-generating device as claimed in claim 1, wherein when the cycle count value and/or the state of health is reset to the predetermined value, the control unit causes another memory unit different from the abovementioned memory unit to store information indicating a cycle count value and/or state of health from immediately before resetting to said predetermined value.

3. The power supply unit for an aerosol-generating device as claimed in claim 2, wherein
the control unit
is configured to be capable of acquiring identification information of the power source unit connected to the connecting portion, and
causes the other memory unit to store the information indicating the cycle count value and/or the state of health from immediately before resetting to said predetermined value, in association with identification information of the old power source unit which was connected to the connecting portion immediately before the power source unit was replaced.

4. The power supply unit for an aerosol-generating device as claimed in claim 3, wherein
when the power source unit which was connected to the connecting portion has been replaced, the control unit acquires identification information of the power source unit after replacement,
the control unit retrieves from the other memory unit a cycle count value and/or state of health corresponding to the identification information of the power source unit after replacement, and
when a cycle count value and/or state of health corresponding to the identification information of the power source unit after replacement was retrieved, the control unit uses said cycle count value and/or state of health as the predetermined value.

5. The power supply unit for an aerosol-generating device as claimed in claim 4, wherein when a cycle count value and/or state of health corresponding to the identification information of the power source unit after replacement was not retrieved, the control unit uses a predetermined initial value as the predetermined value.

6. The power supply unit for an aerosol-generating device as claimed in any one of claims 1 to 5, wherein
when the power source unit which was connected to the connecting portion has been replaced, the control unit implements a predetermined operating check to detect faults relating to the power source unit after replacement, and
when no faults were detected by the operating check, the control unit resets the cycle count value and/or the state of health stored by the memory unit to the predetermined value.

7. The power supply unit for an aerosol-generating device as claimed in claim 6, wherein when no faults were detected by the operating check and there has been a predetermined user operation, the control unit resets the cycle count value and/or the state of health stored by the memory unit to the predetermined value.
